# EUROPEAN PATENT APPLICATION

(11) **EP 3 166 318 A1**
(43) Date of publication of application: **10.05.2017**
(21) Application number: 15814154.9
(22) Date of filing: 17.06.2015
(51) Int. Cl.: H04N 21/2381, H04N 21/238

(54) **INFORMATION PROCESSING DEVICE AND METHOD**

(30) Priority: 01.07.2014 JP 2014136290
(71) Applicant: Sony Corporation, Tokyo 108-0075 (JP)
(72) Inventor: HIRABAYASHI Mitsuhiro, Tokyo 108-0075 (JP); NAKAGAMI Ohji, Tokyo 108-0075 (JP)
(74) Representative: D Young & Co LLP
(86) International application number: PCT/JP2015/067425
(87) International publication number: WO 2016/002513

(57) **Abstract**

The present technology relates to an information processing device and an information processing method configured to enable the control of the provision of an auxiliary image used with a main image.

The information processing device according to the present technology generates a file containing a track storing encoded data in which image data of the auxiliary image used with the main image is encoded and auxiliary information serving as information regarding that auxiliary image. The present technology can be applied to, for example, an information processing device, an image processing device, an image encoding device, or an image decoding device.

## Description

### TECHNICAL FIELD

The present technology relates to an information processing device and an information processing method. In particular, the present technology relates to an information processing device and an information processing method configured so as to be able to control the provision of an auxiliary image used with a main image.

### BACKGROUND ART

In recent years, moving picture experts group - dynamic adaptive streaming over HTTP (MPEG-DASH) has been standardized as a content delivery technology using a HyperText transfer protocol (HTTP) (for example, refer to Non-patent Document 1). MPEG-DASH employs an adaptive bitrate streaming (ABS) technology in which a plurality of items of encoded data expressing the same content with different bit rates is stored in a content server such that a client selects one of the plurality of items of the encoded data depending on a network band to reproduce.

Incidentally, for example, some encoding modes including scalable high efficiency video coding (SHVC) capable of encoding a plurality of hierarchies (layers) use one of the layers to encode an auxiliary image (also referred to as AUX image and so on) such as depth information (Depth) and a subtitle used with a usual image, namely, a main image.

### CITATION LIST

### NON-PATENT DOCUMENT

Non-patent Document 1: MPEG-DASH (Dynamic Adaptive Streaming over HTTP) (URL: http://mpeg.chiariglione.org/standards/mpeg-dash/media-presentation-description-and-segment-formats/text-isoiec-23009-12012-dam-1)

### SUMMARY OF THE INVENTION

### PROBLEMS TO BE SOLVED BY THE INVENTION

In a conventional delivery format such as the MPEG-DASH standard, however, such an auxiliary image has not been able to be identified. Accordingly, there has been a risk where the auxiliary image is incorrectly processed as a usual image at equipment on a receiving and reproducing side.

The present technology has been proposed by taking such a situation in consideration and an object thereof is to enable the control of the provision of the auxiliary image used with the main image.

### SOLUTIONS TO PROBLEMS

One aspect of the present technology is an information processing device including a file generation unit configured to generate a file containing a track storing encoded data in which image data of an auxiliary image used with a main image is encoded and auxiliary information serving as information regarding the auxiliary image.

The auxiliary information can be configured to contain identification information indicating that the track is a track storing the encoded data in which the image data of the auxiliary image is encoded.

The auxiliary information can be configured to contain information indicating a type of the auxiliary image.

The information indicating the type of the auxiliary image can be configured to contain information indicating whether the auxiliary image is information on an α channel used as chroma key, depth information, or information on overlay displayed by being superimposed on the main image.

The auxiliary information can be configured to further contain additional information on the encoded data, which corresponds to the information indicating the type of the auxiliary image.

The auxiliary information can be configured to be stored in a sample entry of the track.

The file generation unit can be configured to generate a file containing the track storing the encoded data in which the image data of the main image is encoded as a file different from the file containing the track storing the encoded data in which the image data of the auxiliary image is encoded.

The file generation unit can generate the plurality of files each containing the track storing the encoded data in which the image data of the main image is encoded with respect to one file containing the track storing the encoded data in which the image data of the auxiliary image is encoded.

The file generation unit can generate a file containing both of the track storing the encoded data in which the image data of the auxiliary image is encoded and the track storing the encoded data in which the image data of the main image is encoded.

Additionally, the one aspect of the present technology is an information processing method configured to generate a file containing a track storing encoded data in which image data of an auxiliary image used with a main image is encoded and auxiliary information serving as information regarding the auxiliary image.

Another aspect of the present technology is an information processing device including a meta data generation unit configured to generate meta data that controls reproduction of a file containing encoded data in which image data of an auxiliary image used with a main image is encoded while containing auxiliary information serving as information regarding the auxiliary image.

The auxiliary information can be configured to be set in a representation to which a segment belongs, in which segment the file containing the encoded data in which the image data of the auxiliary image is encoded is set.

The auxiliary information can be configured to contain information indicating a type of the auxiliary image.

The information indicating the type of the auxiliary image can be configured to contain information indicating whether the auxiliary image is information on an α channel used as chroma key, depth information, or information on overlay displayed by being superimposed on the main image.

The auxiliary information can be configured to further contain additional information on the encoded data, which corresponds to the information indicating the type of the auxiliary image.

At least a portion of the auxiliary information can be configured to be set in an essential property of a representation to which a segment belongs, in which segment the file containing the encoded data in which the image data of the auxiliary image is encoded is set.

The meta data can be configured to have both of an adaptation set containing information on the file containing the encoded data in which the image data of the auxiliary image is encoded and an adaptation set containing information on a file containing the encoded data in which the image data of the main image is encoded.

The meta data can be configured to have the plurality of representations belonging to the adaptation set containing the information on the file containing the encoded data in which the image data of the main image is encoded.

The meta data can be configured to have an adaptation set containing information on a file containing both of the encoded data in which the image data of the auxiliary image is encoded and the encoded data in which the image data of the main image is encoded.

Additionally, the another aspect of the present technology is an information processing method configured to generate meta data that controls reproduction of a file containing encoded data in which image data of an auxiliary image used with a main image is encoded while containing auxiliary information serving as information regarding the auxiliary image.

In the one aspect of the present technology, the file containing the track storing the encoded data in which the image data of the auxiliary image used with the main image is encoded and the auxiliary information serving as information regarding the auxiliary image is generated.

In the another aspect of the present technology, the meta data that controls the reproduction of the file containing the encoded data in which the image data of the auxiliary image used with the main image is encoded while containing the auxiliary information serving as information regarding the auxiliary image is generated.

### EFFECTS OF THE INVENTION

According to the present technology, information can be processed. Additionally, according to the present technology, the provision of an auxiliary image used with a main image can be controlled.

### BRIEF DESCRIPTION OF DRAWINGS

Fig. 1 is a diagram for explaining an overview of MPEG-DASH.
Fig. 2 is a diagram illustrating an exemplary configuration of MPD.
Fig. 3 is a diagram for explaining temporal separation of content.
Fig. 4 is a diagram illustrating an exemplary hierarchical structure indicating a period and lower levels thereof in the MPD.
Fig. 5 is a diagram for explaining an exemplary configuration of an MPD file on a temporal axis.
Fig. 6 is a diagram illustrating exemplary bit streams of tile images.
Fig. 7 is a diagram for explaining an exemplary MP4 file of the tile images.
Fig. 8 is a diagram for explaining another exemplary MP4 file of the tile images.
Fig. 9 is a block diagram illustrating an exemplary main configuration of a file generation device.
Fig. 10 is a diagram illustrating an exemplary main configuration of the MP4 file.
Fig. 11 is a diagram illustrating exemplary syntax of a configuration box.
Fig. 12 is a diagram illustrating an exemplary main configuration of the MPD.
Fig. 13 is a flowchart for explaining an exemplary flow of MP4 file generation processing.
Fig. 14 is a flowchart for explaining an exemplary flow of MPD generation processing.
Fig. 15 is a block diagram illustrating an exemplary main configuration of a file reproducing device.
Fig. 16 is a flowchart for explaining an exemplary flow of MP4 file reproduction processing.
Fig. 17 is a flowchart for explaining an exemplary flow of MPD reproduction processing.
Fig. 18 is a diagram illustrating another exemplary configuration of the MP4 file.
Fig. 19 is a diagram illustrating another exemplary configuration of the MPD.
Fig. 20 is a diagram illustrating still another exemplary configuration of the MP4 file.
Fig. 21 is a diagram illustrating still another exemplary configuration of the MPD.
Fig. 22 is a block diagram illustrating an exemplary main configuration of a delivery system.
Fig. 23 is a block diagram illustrating an exemplary main configuration of a computer.

### MODE FOR CARRYING OUT THE INVENTION

Modes for carrying out the present disclosure (hereinafter, referred to as embodiments) will be described below. Note that the description will be given in the following order.
1. First Embodiment (a file generation device and a file reproducing device)
2. Second Embodiment (in the case of a common auxiliary image with respect to a plurality of main images)
3. Third Embodiment (integration of a main image and an auxiliary image to one file)
4. Fourth Embodiment (delivery system)
5. Fifth Embodiment (computer)

### <1. First Embodiment>

### <DASH>

In the past, moving picture experts group - dynamic adaptive streaming over HTTP (MPEG-DASH) has been known as a content delivery technology using a HyperText transfer protocol (HTTP) as described in, for example, Non-patent Document 1. MPEG-DASH employs an adaptive bitrate streaming (ABS) technology in which a plurality of items of encoded data expressing the same content with different bit rates is stored in a content server such that a client selects one of the plurality of items of the encoded data depending on a network band to reproduce.

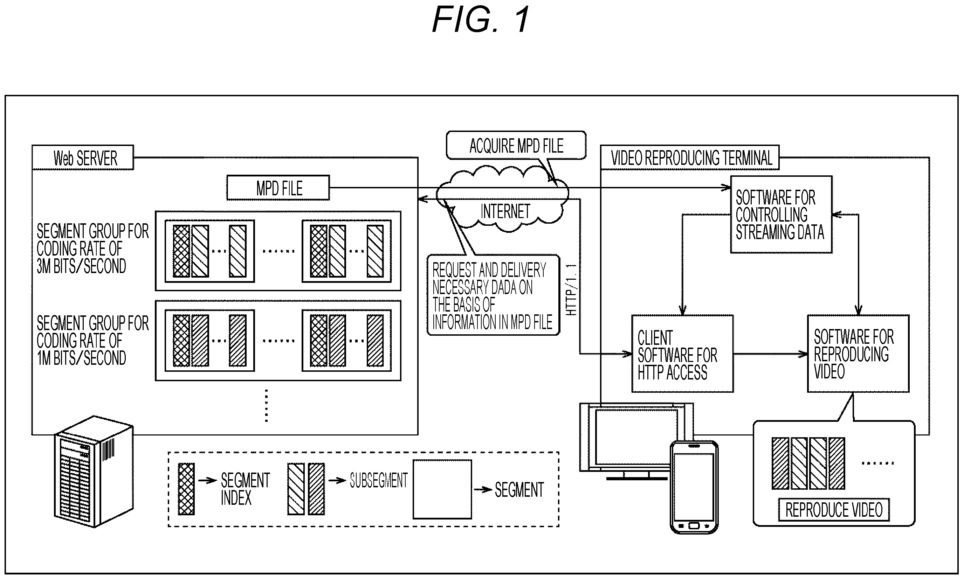

A procedure for transmitting content by DASH will be described with reference to Fig. 1. First, in a video reproducing terminal on a side where content is acquired, software for controlling streaming data selects a media presentation description (MPD) file of desired content to acquire the file from a web server. The MPD is meta data that manages content to be delivered such as a video or an audio.

Upon acquiring the MPD, the software for controlling the streaming data in the video reproducing terminal analyzes this MPD to carry out the control such that data (DASH segment) of the desired content appropriate to the quality of a communication line, the performance of the video reproducing terminal, and so on is acquired from the web server. Under the control of client software for HTTP access, the client software acquires this DASH segment from the web server by using the HTTP. The content acquired in this manner is reproduced by video reproduction software.

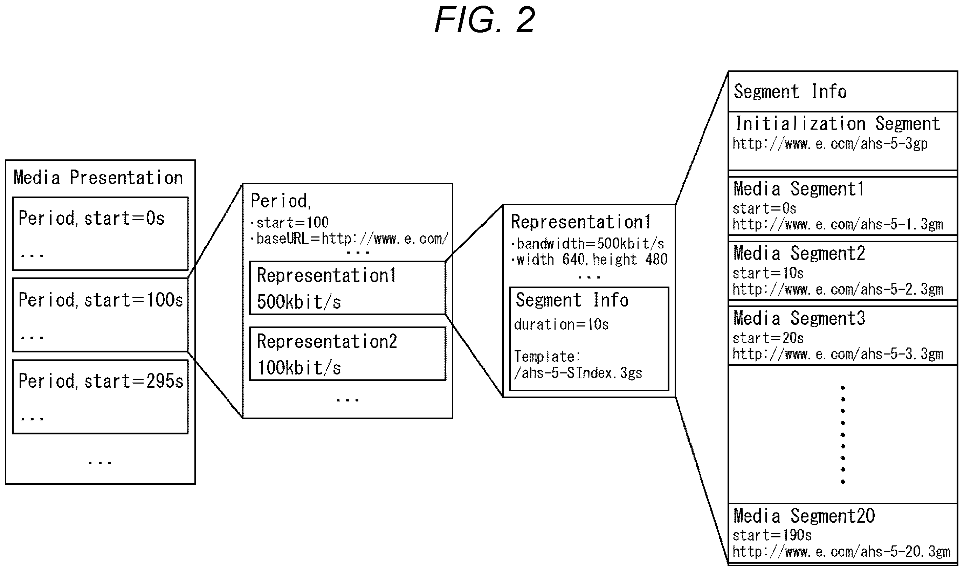

For example, the MPD has a configuration as illustrated in Fig. 2. In the analysis (parsing) of the MPD, the client selects an optimum one from among the attributes of representations (Representation) contained in periods (Period) in the MPD (Media Presentation in Fig. 2).

The client reads a top segment (Segment) of the selected representation (Representation) and acquires an initialization segment (Initialization Segment) to process. Subsequently, the client acquires subsequent segments (Segment) to reproduce.

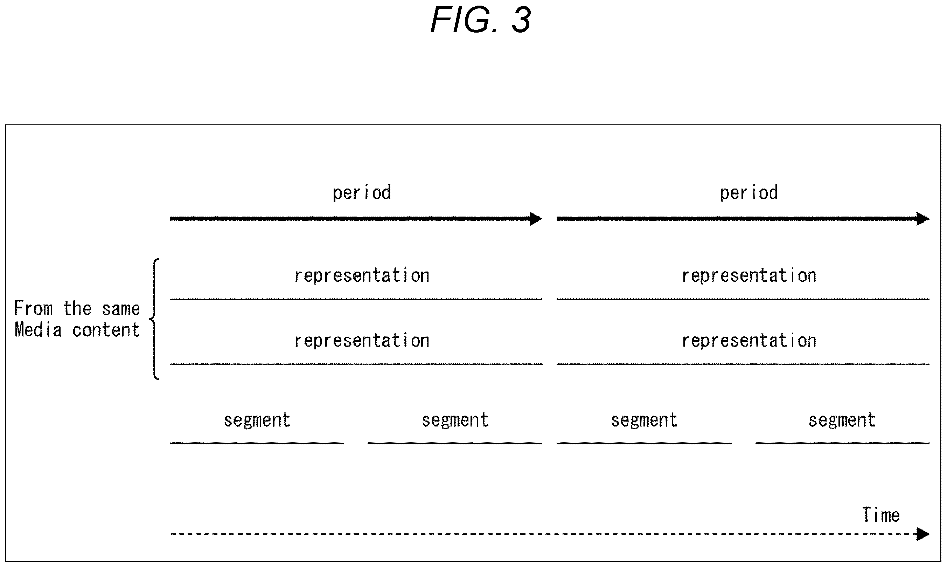

Meanwhile, a relationship among the periods (Period), the representations (Representation), and the segments (Segment) in the MPD is as illustrated in Fig. 3. Specifically, one piece of media content can be managed on a period basis (Period), where the period serves as a data unit in a temporal direction, whereas each of the periods (Period) can be managed on a segment basis (Segment), where the segment serves as a data unit in the temporal direction. In addition, the plurality of representations (Representation) having attributes such as bit rates different from one another can be configured with respect to each of the periods (Period).

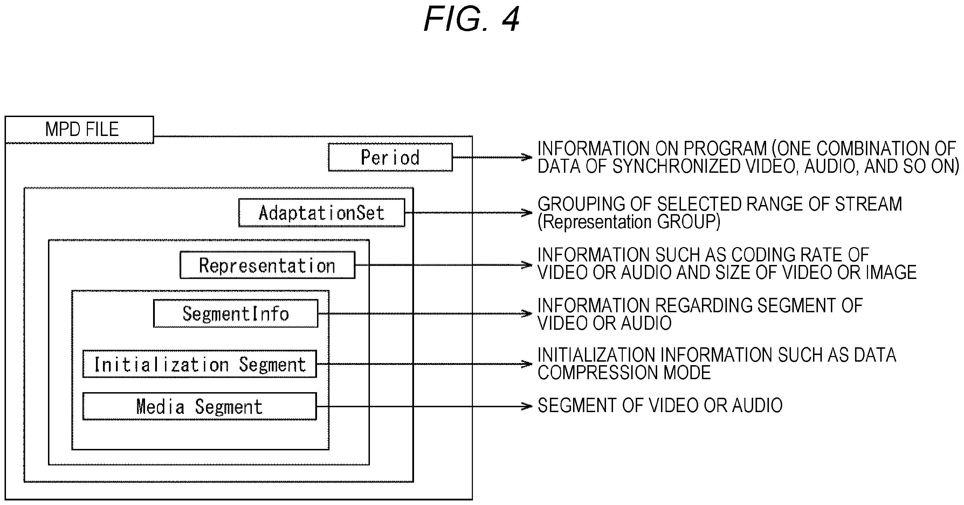

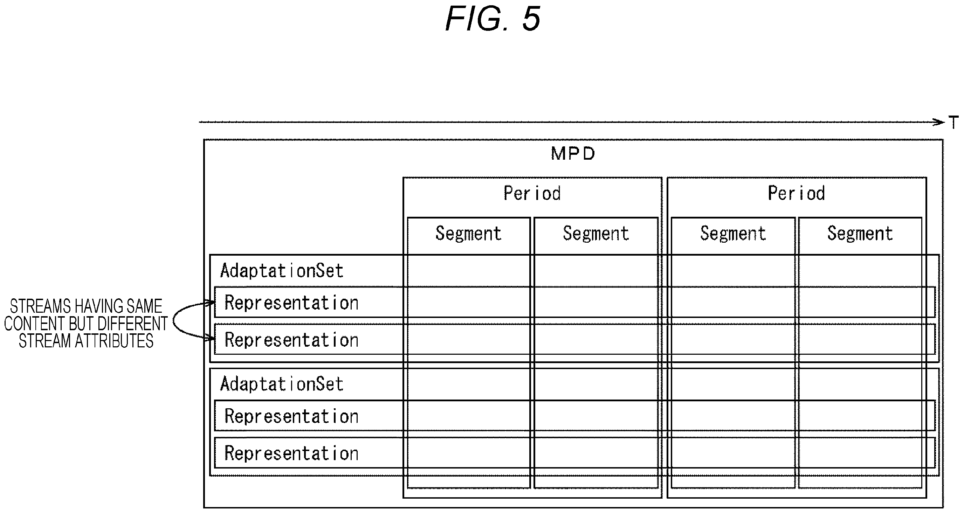

Accordingly, this file of the MPD (also referred to as MPD file) has a hierarchical structure at the periods (Period) and lower levels thereof as illustrated in Fig. 4. In addition, when placed in order on a temporal axis, this structure of the MPD is as illustrated in the example in Fig. 5. As it is clear from the example in Fig. 5, the plurality of representations (Representation) is present with respect to the same segment (Segment). The client adaptively selects one of these representations and consequently can acquire proper stream data to reproduce depending on the communication environment, the decoding capability of the own device, and so on.

### <Tile Structure>

While the delivery of data of the whole image has been adaptively controlled in the conventional DASH as described above, an idea of adaptively selecting a partial image as a portion of the whole image instead of the whole image to deliver has been considered. Examples of the idea have included delivering of a partial image corresponding to a portion of the whole image selected by a terminal on a side where image data is received, and controlling of the size of the partial image to be delivered depending on the performance of the terminal (e.g., the throughput of a CPU or the like and the size of a display), a transmission path, a load status of a server, and so on.

In order to adaptively deliver the partial image as described above, a concept of a tile (Tile) has been employed. The tile (Tile) represents a partial region obtained by dividing the whole image into a layout determined in advance (by size, shape, the number, or the like). Hereinafter, an image in one tile will be referred to as tile image. Once the whole image is divided into the tiles in advance as described above, it is made possible to adaptively deliver the partial image with ease only by selecting the tile image to be delivered. In this case, the partial image is constituted by a single number or a plural number of the tile images.

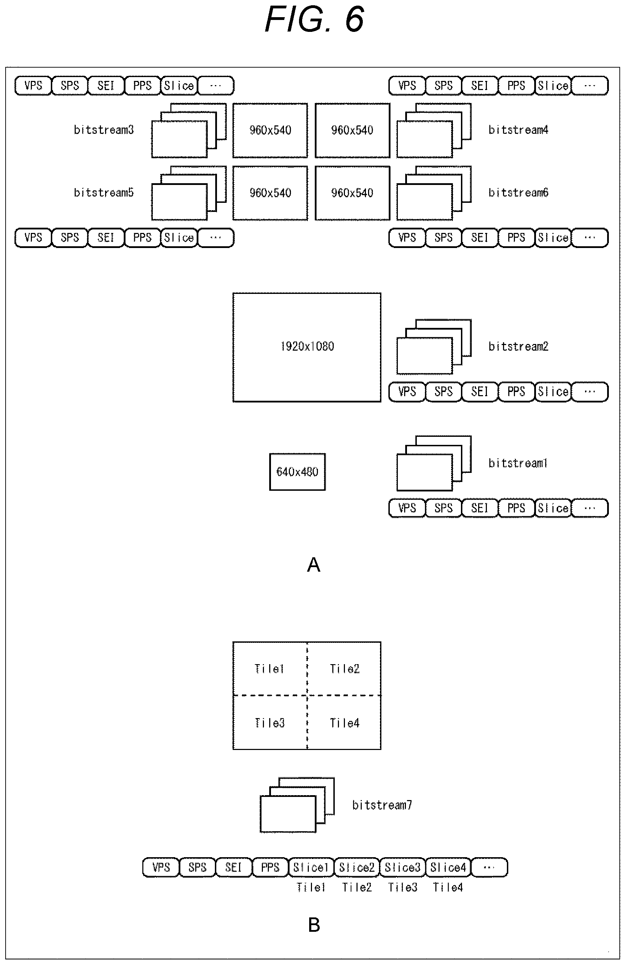

In a case where the HTTP is used in delivering as in the DASH, the image data is encoded and then, a bit stream thereof is converted to a file to be delivered (made open to the public as a file). In the case of the whole image having the tile structure as described above, the image data is encoded for each of the tile images independently. At this time, as in the example illustrated in A of Fig. 6, the encoded data of each of the tiles may be converted to a single bit stream.

In the example in A of Fig. 6, respective images of the whole image having a size of 640 × 480, the whole image having a size of 1980 × 1080, and the tile images (four partial images) obtained by dividing that whole image into two in both of a longitudinal direction and a lateral direction so as to each have a size of 960 × 540 are prepared as images to be delivered. Data of the whole image having a size of 640 × 480 is encoded so as to be converted to one bit stream (bitstreaml) and similarly, data of the whole image having a size of 1980 × 1080 is encoded so as to be converted to one bit stream (bitstream2). Furthermore, separately from these items of the data, data of the respective tile images each having a size of 960 × 540 is encoded independently from each other such that each item of the encoded data is converted to one bit stream (bitstream3 to bitstream6).

Header information such as a video parameter set (Video Parameter Set (VPS)), a sequence parameter set (Sequence Parameter Set (SPS)), supplemental enhancement information (Supplemental Enhancement Information (SEI)), and a picture parameter set (Picture Parameter Set (PPS)) is added to each of the bit streams and the bit stream of the image data is placed in order in units of slices (Slice).

When the structure as described above is employed, by selecting the bit stream to be delivered from among bitstream3 to bitstream6, the tile image to be delivered can be selected. In addition, in the case of the example illustrated in A of Fig. 6, the respective tile images can be delivered as in the whole image.

Incidentally, for example, an encoding mode such as high efficiency video coding (HEVC) supports the structure referred to as tile (Tile) in which the whole image is divided and is capable of encoding each of the tiles independently. For example, decoding can be carried out such that images of some of these tiles are solely obtained. In other words, decoding can be carried out such that the partial image, namely, a portion of the whole image is solely obtained.

When such a function of the encoding mode is utilized, as in the example illustrated in B of Fig. 6, the encoded data of the plurality of tile images can be converted to one bit stream (bitstream7). Specifically, in this case, encoding is configured to be carried out in such a manner that the above-described tile (Tile) for delivery is treated as a tile (Tile) supported by the encoding mode. Data of each of the tiles is placed in order as a slice (Slice) in the bit stream in this case.

### <MP4 File>

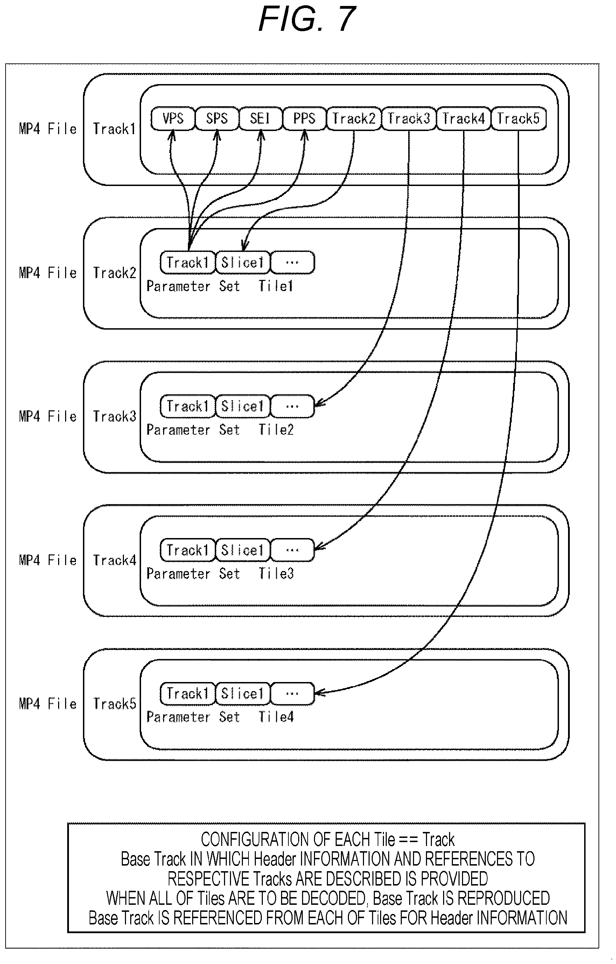

As described above, the bit stream to be delivered is converted to a file in accordance with, for example, an MP4 file format. In this case, as in the example illustrated in Fig. 7, the bit streams of the respective tiles can be converted to separate files. The bit stream of each of the tiles is managed in a unit called a track (Track). In addition, a base track (Base Track) in which the header (Header) information of the respective tiles and references to the respective tracks are described is provided and converted to a file as a different one from the files of the bit streams of the respective tiles. When all of the tiles are to be decoded, the base track is reproduced and, when each of the tiles is to be decoded, the base track is referenced for the header information.

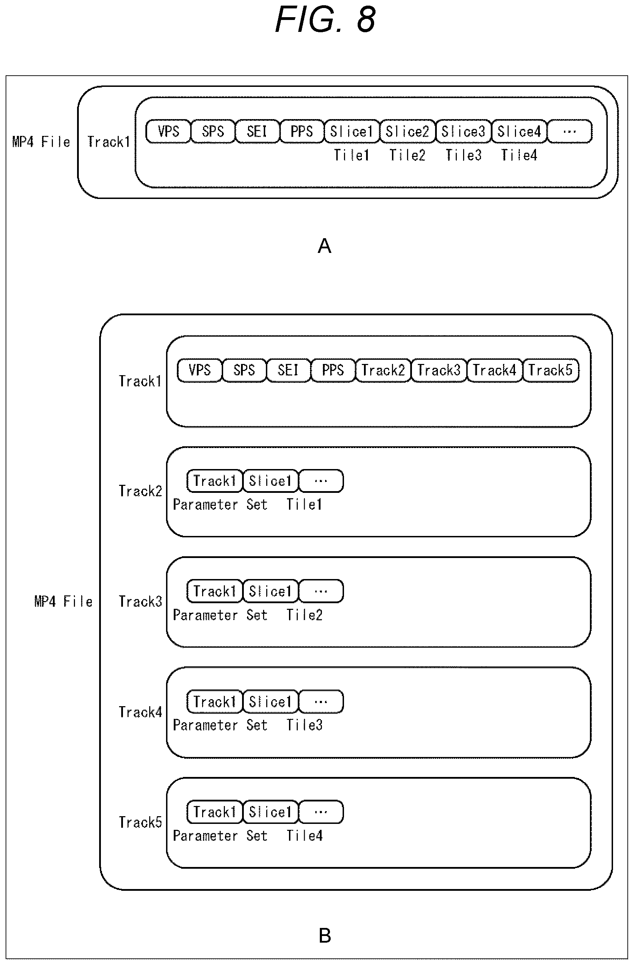

Meanwhile, as in the example illustrated in Fig. 8, the bit streams of the respective tiles can be collectively converted to one file as well. At this time, data of the respective tiles can be collectively managed as one track as in A of Fig. 8, or alternatively, the respective tiles can be managed as tracks different from one another as in B of Fig. 8. In this case, as in the case of Fig. 7, a base track (Base Track) in which the header (Header) information of the respective tiles and references to the respective tracks are described is provided.

### <Auxiliary Image>

Incidentally, for example, some encoding modes including scalable high efficiency video coding (SHVC) capable of encoding a plurality of hierarchies (layers) use one of the layers to encode the auxiliary image (also referred to as AUX image and so on) used with a usual image, namely, the main image.

Examples of the auxiliary image include depth information (Depth) of the main image, an alpha channel image (alpha_channel) used as chroma key and so on, and an overlay image (overlay) such as a subtitle and an on-screen caption. Any information can be off course employed as long as the information is used with the main image.

The auxiliary images as described above are treated in a different manner from a general image in many cases. For example, the auxiliary image is fundamentally constituted by information for assisting the main image such as the aforementioned examples and thus deemed to be used (for example, displayed) with the corresponding main image. Accordingly, the auxiliary image is information not suitable for being used (for example, displayed) alone. To give an example, information such as the depth information, the chroma key, and the subtitle can obtain exact effects thereof when displayed with the corresponding main images.

In the case of the depth information, for example, the depth information is used in such a manner to create an image for stereoscopic vision when combined with the main image. As an additional example, as for the chroma key, when used with the main image, image processing can be carried out to separate a portion of a main object from a portion of a background within an image, for example. Furthermore, in the exemplary case of the subtitle serving as an image for overlay, the subtitle can make sense as itself when displayed with the main image. In order to obtain these exact effects as described above, the auxiliary image is required to be used with the main image. Even when the auxiliary image is used (for example, displayed) alone, it is difficult to obtain these exact effects as described above.

Note that inter-layer prediction is not carried out on the auxiliary image during encoding.

In contrast to this, the main image corresponding to the auxiliary image can be used (can be displayed) alone. In other words, the auxiliary image is information not always needed and only required to be used solely when necessary.

Accordingly, when this auxiliary image is delivered, it is necessary to cause equipment on a receiving and reproducing side to recognize that a delivered image is the auxiliary image. It is also necessary to provide information required for using the auxiliary image. Additionally, it is desirable that the main image and the auxiliary image be linked with each other when provided and also the auxiliary image be made selectable so as to be received solely when necessary.

As a method for controlling the provision of the image such that the image can be provided depending on the necessity, a method using the MP4 file and the MPD in the MPEG-DASH has been known. By using these methods, easy control of the auxiliary image when used is enabled at the equipment on the receiving and reproducing side.

However, a function for distinguishing the auxiliary image from a general file is not provided in the MP4 file and the MPD and thus, a delivery format such as the conventional MPEG-DASH standard has not been able to identify such an auxiliary image as described above. Accordingly, there has been a risk where the auxiliary image is incorrectly processed as a usual image at equipment on the receiving and reproducing side.

### <Identification of Auxiliary Image and Provision of Auxiliary Information>

For a solution to this, a file containing a track storing the encoded data in which the image data of the auxiliary image used with the main image is encoded and auxiliary information serving as information regarding that auxiliary image is configured to be generated. For example, the MP4 file may be configured to be generated as the above-described file.

As described above, when the auxiliary information is stored in one track along with the auxiliary image and the auxiliary information is provided to the equipment on the receiving and reproducing side along with the auxiliary image, the equipment on the receiving and reproducing side can recognize that image as the auxiliary image to distinguish from the usual image. With this, it is possible to suppress incorrect processing on the auxiliary image due to being taken as the usual image. In other words, the provision of the auxiliary image used with the main image can be controlled.

In addition, this auxiliary information may be configured to contain identification information indicating that this track is a track storing the encoded data in which the image data of the auxiliary image is encoded. By providing such identification information as the auxiliary image to the equipment on the receiving and reproducing side, it is made easier for the equipment on the receiving and reproducing side to identify the auxiliary image.

Meanwhile, the auxiliary information may be configured to contain information indicating a type of the auxiliary image. As described above, the usage of the auxiliary image is not limited to a specific one. Accordingly, when such information indicating the type of the auxiliary image is presented as the auxiliary information to the equipment on the receiving and reproducing side, that auxiliary image can be properly utilized at the equipment on the receiving and reproducing side with ease.

Furthermore, the information indicating the type of the auxiliary image may be configured to contain information indicating whether the auxiliary image is information on the α channel used as the chroma key, the depth information, or information on overlay displayed by being superimposed on the main image. Although the specific component of the auxiliary image is arbitrary, when the component is assumed to be limited to the aforementioned examples, for example, the identification information can be used to present, to the equipment on the receiving and reproducing side, which one of the types of the specific components is applicable to that auxiliary image with more ease.

Additionally, the auxiliary information can be configured to further contain additional information on the encoded data, which corresponds to the information indicating the type of the auxiliary image. For example, when the encoding mode for the auxiliary image is the high efficiency video coding (HEVC) or the like, the supplemental enhancement information (SEI) in accordance with the type of the auxiliary image is contained in the encoded data. This SEI may be configured to be contained in the auxiliary information so as to be provided to the equipment on the receiving and reproducing side. As a result, the equipment on the receiving and reproducing side can obtain more information to process the auxiliary image more properly on the basis of the obtained information.

In addition, the auxiliary information may be configured to be stored in a sample entry of the track. Although a storage location of the auxiliary information is arbitrary, when the auxiliary information is stored in the sample entry, the reference thereto is made easy for the equipment on the receiving and reproducing side.

Meanwhile, a file containing the track storing the encoded data in which the image data of the main image is encoded may be configured to be generated as a file different from the file containing the track storing the encoded data in which the image data of the auxiliary image is encoded. In short, the main image and the auxiliary image may be configured to be individually converted to separate files.

As a method other than the method for generating the above-described files, for example, meta data that controls the reproduction of the file containing the encoded data in which the image data of the auxiliary image used with the main image is encoded while containing the auxiliary information serving as information regarding the auxiliary image may be configured to be generated. For example, the MPD may be configured to be generated as the above-described meta data.

As described above, also in a case where the auxiliary information is provided to the equipment on the receiving and reproducing side as the meta data for the auxiliary image, the equipment on the receiving and reproducing side can recognize that an object to be controlled by that meta data is the auxiliary image to distinguish that auxiliary image from the usual image. With this, it is possible to suppress incorrect processing on the auxiliary image due to being taken as the usual image. In other words, the provision of the auxiliary image used with the main image can be controlled.

In addition, the auxiliary information may be configured to be set in a representation to which a segment belongs, in which segment the file containing the encoded data in which the image data of the auxiliary image is encoded is set. Although the storage location of the auxiliary information is arbitrary, in the case of the MPD, by being set in the representation, the handling of the auxiliary information (the reference thereto and so on) is made easy for the equipment on the receiving and reproducing side.

Meanwhile, the auxiliary information may be configured to contain information indicating the type of the auxiliary image. Furthermore, the information indicating the type of the auxiliary image may be configured to contain information indicating whether the auxiliary image is information on the α channel used as the chroma key, the depth information, or information on overlay displayed by being superimposed on the main image. Additionally, the auxiliary information may be configured to further contain additional information on the encoded data, which corresponds to the information indicating the type of the auxiliary image. These are configured in a manner similar to the aforementioned case for generating the files.

In addition, at least a portion of the auxiliary information may be configured to be set in an essential property of the representation to which the segment belongs, in which segment the file containing the encoded data in which the image data of the auxiliary image is encoded is set. Although a method for setting the auxiliary information is arbitrary, in the case of the MPD, by being set in the essential property as described above, the identification of the auxiliary information and the recognition of the specific component thereof are made easy for the equipment on the receiving and reproducing side.

The meta data may be also configured to have both of an adaptation set containing information on the file containing the encoded data in which the image data of the auxiliary image is encoded and an adaptation set containing information on a file containing the encoded data in which the image data of the main image is encoded. In short, the adaptation set may be configured to be individually generated for each of the main image and the auxiliary image.

### <File Generation Device>

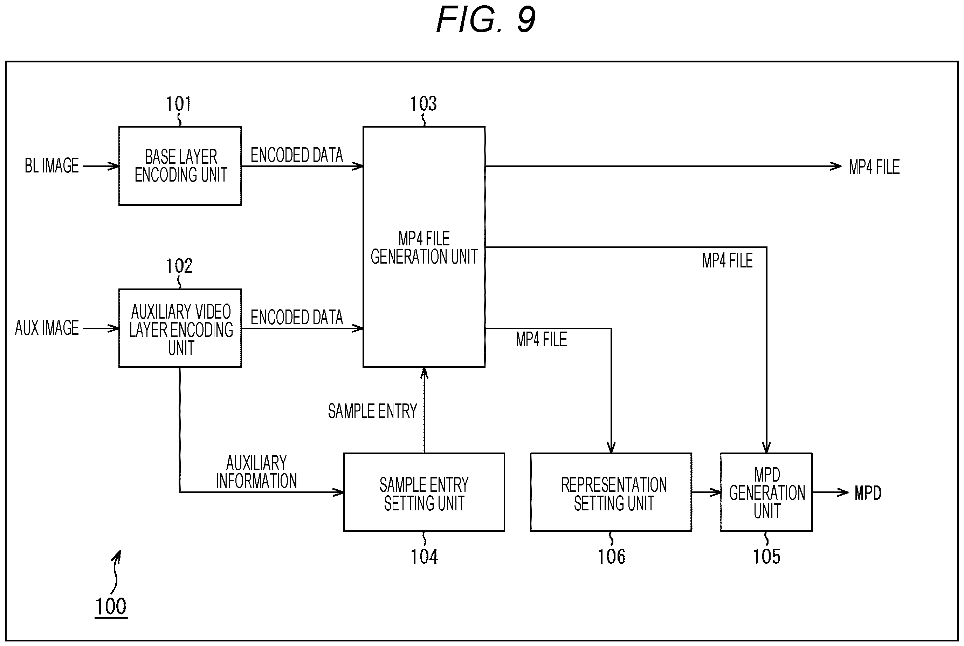

Next, a device that generates the aforementioned MP4 file and MPD will be described. Fig. 9 is a block diagram illustrating an exemplary main configuration of a file generation device presented as an embodiment of an information processing device to which the present technology is applied. In Fig. 9, a file generation device 100 serves as a device configured to encode an image of a base layer (BL image) and an image of an auxiliary video layer, specifically, the auxiliary image (AUX image) such that the MP4 file storing the encoded data of each of the hierarchies that has been obtained is generated and the MPD that controls the delivery of that MP4 file is generated.

As illustrated in Fig. 9, the file generation device 100 includes a base layer encoding unit 101, an auxiliary video layer encoding unit 102, an MP4 file generation unit 103, a sample entry setting unit 104, an MPD generation unit 105, and a representation setting unit 106.

The base layer encoding unit 101 encodes an input image of the base layer (BL image) in accordance with a predetermined encoding mode (for example, the HEVC) to generate the encoded data of the base layer. The base layer encoding unit 101 supplies, to the MP4 file generation unit 103, the encoded data of the base layer (HEVC) that has been generated.

The auxiliary video layer encoding unit 102 encodes an input image of the auxiliary video layer (AUX image) in accordance with a predetermined encoding mode (for example, the SHVC) to generate the encoded data of an enhancement layer. The auxiliary video layer encoding unit 102 supplies, to the MP4 file generation unit 103, the encoded data of the auxiliary video layer (SHVC) that has been generated. The auxiliary video layer encoding unit 102 also supplies the auxiliary information serving as information regarding the AUX image to the sample entry setting unit 104.

The MP4 file generation unit 103 generates a file (MP4 file) storing the encoded data of the base layer (HEVC) supplied from the base layer encoding unit 101 and the encoded data of the auxiliary video layer (SHVC) supplied from the auxiliary video layer encoding unit 102. The MP4 file generation unit 103 stores the encoded data of the base layer (HEVC) and the encoded data of the auxiliary video layer (SHVC) to tracks different from each other in the MP4 file. The MP4 file generation unit 103 also sets the sample entry supplied from the sample entry setting unit 104 in the track storing the encoded data of the auxiliary video layer (SHVC). This sample entry contains the auxiliary information serving as information regarding the AUX image. The MP4 file generation unit 103 outputs the generated MP4 file. The MP4 file generation unit 103 also supplies the generated MP4 file to the MPD generation unit 105, the representation setting unit 106, and so on.

The sample entry setting unit 104 generates the sample entry by using the auxiliary information supplied from the auxiliary video layer encoding unit 102. The sample entry setting unit 104 supplies that sample entry to the MP4 file generation unit 103 and causes the MP4 file generation unit 103 to set that sample entry in the track storing the encoded data of the auxiliary video layer (SHVC).

The MPD generation unit 105 generates the MPD that controls the delivery of the MP4 file supplied from the MP4 file generation unit 103. At this time, the MPD generation unit 105 sets information supplied from the representation setting unit 106 in the representation in the MPD. The MPD generation unit 105 outputs the generated MPD.

The representation setting unit 106 generates information to be set in the representation in the MPD generated by the MPD generation unit 105 by using the MP4 file supplied from the MP4 file generation unit 103 and then supplies the generated information to the MPD generation unit 105 such that the MPD is set accordingly.

### <Exemplary Configuration of MP4 File>

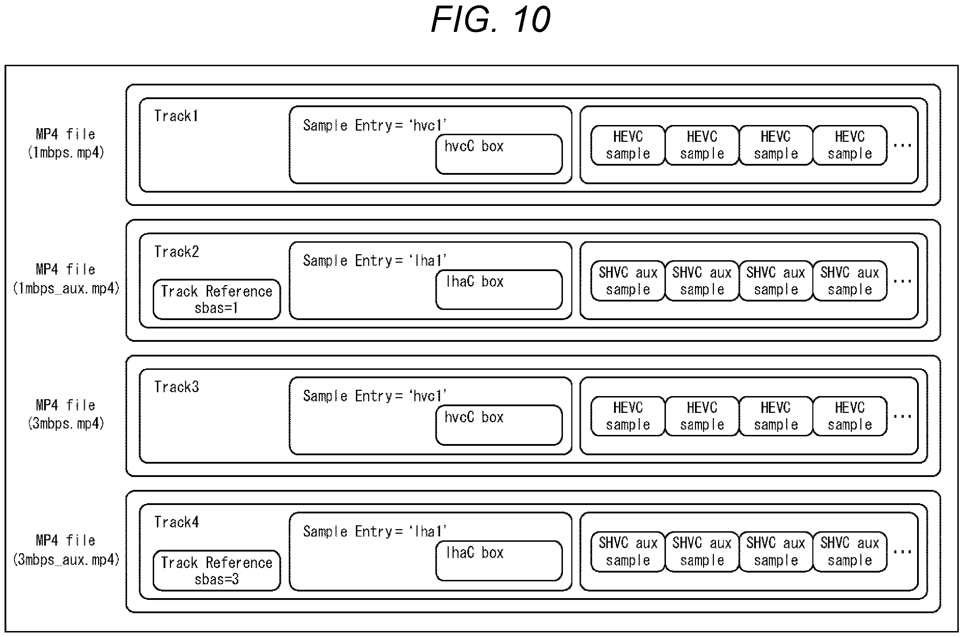

Fig. 10 illustrates an exemplary main configuration of the MP4 file generated by the MP4 file generation unit 103 of the file generation device 100.

In the case of the example in Fig. 10, the MP4 file generation unit 103 generates each of the MP4 file of the main image (base layer) having a bandwidth of 1 mbps (bandwidth=1mbps) (1mbps.mp4), the MP4 file of the auxiliary image thereof (auxiliary video layer) (1mbps_aux.mp4), the MP4 file of the main image (base layer) having a bandwidth of 3 mbps (bandwidth=3mbps) (3mbps.mp4), and the MP4 file of the auxiliary image thereof (auxiliary video layer) (3mbps_aux.mp4). In other words, the main image and the auxiliary image (AUX image) thereof are stored in the different tracks from each other and these tracks are converted to files as different files from each other.

A sample (HEVC sample) of the encoded data of the base layer (that is, the encoded data of the main image) is stored in a track 1 (Track1) contained in the MP4 file (1mbps.mp4). In addition, encoding information indicating that the encoding mode for the base layer is the HEVC is set in the sample entry thereof (Sample Entry = 'hvc1'). Furthermore, an hvcC box (hvcC box) storing configuration (configuration) information required for decoding the HEVC-encoded data is set in this sample entry.

A sample (SHVC aux sample) of the encoded data of the auxiliary video layer (that is, the encoded data of the AUX image corresponding to the main image in the track 1) is stored in a track 2 (Track2) contained in the MP4 file (1mbps_aux.mp4). In addition, the encoding information indicating that the track 2 is a track for the auxiliary video layer and the encoding mode therefor is the SHVC is set in the sample entry thereof (Sample Entry = 'lha1'). In other words, the encoding information different from the encoding information (lhv1) in the case of the main image whose encoding mode is the SHVC is set therein. Furthermore, an lhaC box (lhaC box) storing the configuration (configuration) information required for decoding the encoded data of the auxiliary image in the SHVC encoding mode is set in this sample entry.

Additionally, information indicating that the reference to the track 1 for the base layer corresponding to the track 2 is necessary (1) and the type of that reference (sbas) is set in a track reference (Track Reference) in the track 2 (sbas=1).

The configuration of the MP4 file (3mbps.mp4) is similar to that of the MP4 file (1mbps.mp4) except that the bandwidth thereof is different from that of the MP4 file (1mbps.mp4). Accordingly, the configuration of the MP4 file (3mbps_aux.mp4) is also similar to that of the MP4 file (1mbps_aux.mp4) except that the bandwidth thereof is different from that of the MP4 file (1mbps_aux.mp4). Note that, however, the track reference (Track Reference) of the track 4 (Track4) in the MP4 file (3mbps_aux.mp4) indicates that the reference to the track 3 is necessary (sbas=3).

As described above, in the encoding information in the sample entry of the track storing the information on the auxiliary image, a value indicating that this track stores the information on the auxiliary image is set. Specifically, the sample entry setting unit 104 sets such a value in the encoding information in the sample entry on the basis of the auxiliary information. In other words, in the sample entry of the track storing the information on the auxiliary image, the identification information indicating that this track stores the information on the auxiliary image is set as the auxiliary information. Accordingly, by referencing to this encoding information, the equipment on a side where this MP4 file is received and reproduced can recognize with ease that the information on the auxiliary image is stored in that track.

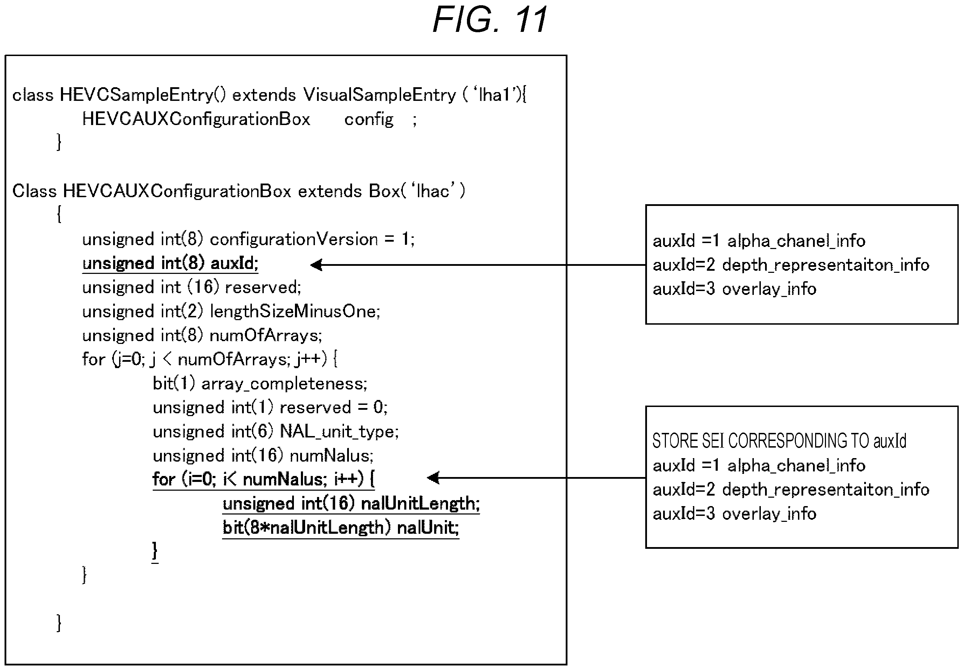

Additionally, information to be contained in the lhaC box (lhaC box) is arbitrary. Fig. 11 illustrates exemplary syntax of the lhaC box (lhaC box).

In the case of the example in Fig. 11, an "auxId" is stored in the lhaC box (lhaC box) as the information indicating the type of the auxiliary image. The value of this "auxId" indicates that the auxiliary image (AUX image) is an image for the alpha channel when set to "1" (auxId=1 alpha_chanel_info). Meanwhile, the value of this "auxId" indicates that the auxiliary image (AUX image) is the depth information when set to "2" (auxId=2 depth_representation_info). Additionally, the value of this "auxId" indicates that the auxiliary image (AUX image) is an image for overlay when set to "3" (auxId=3 overlay_info).

When such identification information "auxId" is stored in the lhaC box (lhaC box) so as to be provided to the equipment on the receiving and reproducing side, the type of that auxiliary image can be determined at the equipment on the receiving and reproducing side with ease, whereby the auxiliary image can be utilized properly. Although a method for specifying the type of the auxiliary image is arbitrary, when the types of the auxiliary images are limited in advance as described above, an increase in the information amount can be suppressed by using such identification information to specify the type of the auxiliary image. In addition, a format of the information is formulated as a standard and accordingly, the handling of this information is made easy for the equipment on the receiving and reproducing side. As a result, the type of the auxiliary image can be determined with more ease.

The aforementioned identification information "auxId" is off course an example. The type of the auxiliary image (AUX) image is arbitrary and not limited to the example mentioned above. The number of the types of the auxiliary images serving as candidates is also arbitrary. Additionally, the value of the identification information "auxId" that specifies the type of the auxiliary image is arbitrary as well.

Furthermore, in the case of the example in Fig. 11, the SEI corresponding to the type of the auxiliary image (the value of the identification information "auxId") is stored in this lhaC box (lhaC box). As described above, when the additional information in accordance with the type of the auxiliary image is additionally stored, the equipment on the receiving and reproducing side can consequently obtain more information to process the auxiliary image more properly on the basis of the obtained information.

### <Exemplary Configuration of MPD>

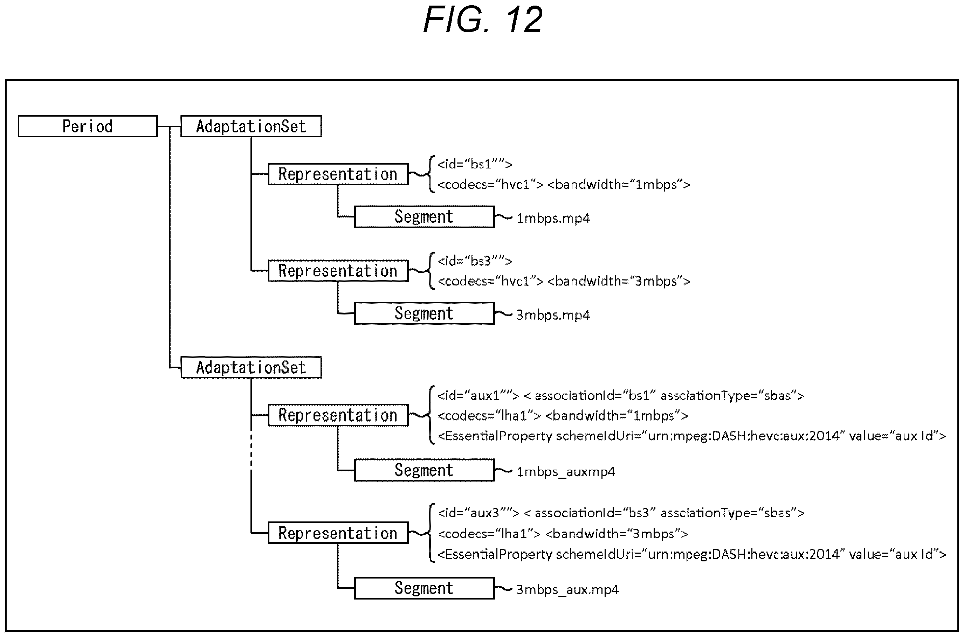

Next, Fig. 12 illustrates an exemplary main configuration of the MPD generated by the MPD generation unit 105 of the file generation device 100.

In the case of the example in Fig. 12, two adaptation sets (AdaptationSet) are set at a lower level of the period (Period). Information on the main image is stored in one adaptation set, whereas information on the auxiliary image is stored in the other adaptation set.

Two representations (Representation) are set at a lower level of the adaptation set for the main image. Information on the main image having a bandwidth of 1 mbps is stored in one representation, whereas information on the main image having a bandwidth of 3 mbps is stored in the other representation.

A segment (Segment) is set at a lower level of the representation for the information on the main image having a bandwidth of 1 mbps, where information on the MP4 file (1mbps.mp4) of the main image (base layer) having a bandwidth of 1 mbps (bandwidth=1mbps) is to be set (registered) to that segment.

In addition, the identification information indicating that the information on the main image having a bandwidth of 1 mbps is stored there (<id="bs1">), the encoding information indicating that the encoding mode for that main image is an HEVC mode (<codecs="hvc1">), and information indicating the bandwidth (<bandwidth="1mbps">) are set in that representation.

A segment is set at a lower level of the representation for the information on the main image having a bandwidth of 3 mbps, where information on the MP4 file (3mbps.mp4) of the main image (base layer) having a bandwidth of 3 mbps (bandwidth=3mbps) is to be set (registered) to that segment.

In addition, the identification information indicating that the information on the main image having a bandwidth of 3 mbps is stored there (<id="bs3">), the encoding information indicating that the encoding mode for that main image is the HEVC mode (<codecs="hvc1">), and information indicating the bandwidth (<bandwidth="3mbps">) are set in that representation.

Meanwhile, two representations are set at a lower level of the adaptation set for the auxiliary image. Information on the auxiliary image having a bandwidth of 1 mbps is stored in one representation, whereas information on the auxiliary image having a bandwidth of 3 mbps is stored in the other representation.

A segment is set at a lower level of the representation for the information on the auxiliary image having a bandwidth of 1 mbps, where information on the MP4 file (1mbps_aux.mp4) of the auxiliary image (base layer) having a bandwidth of 1 mbps (bandwidth=1mbps) is to be set (registered) to that segment.

In addition, the identification information indicating that the information on the auxiliary image having a bandwidth of 1 mbps is stored there (<id="aux1">), the encoding information indicating that the encoding mode for that auxiliary image is an SHVC mode (<codecs="lha1">), and information indicating the bandwidth (<bandwidth="1mbps">) are set in that representation as the auxiliary information. By referencing these items of the information, the equipment on the receiving and reproducing side can recognize that an object to be controlled by that meta data is the auxiliary image to distinguish that auxiliary image from the usual image. With this, it is possible to suppress incorrect processing on the auxiliary image due to being taken as the usual image. In other words, the provision of the auxiliary image used with the main image can be controlled. Additionally, when the auxiliary information as described above is set in the representation, the handling of the auxiliary information (the reference thereto and so on) is made easy for the equipment on the receiving and reproducing side.

Furthermore, link information (association information) indicating the reference to the representation for the information on the main image having a bandwidth of 1 mbps (id="bs1") and the type of that reference (sbas) (<associationId="bs1" associationType="sbas">) is set in this representation as the auxiliary information. With such auxiliary information, a reference relationship between the representations (between the MP4 files) can be recognized with ease at the equipment on the receiving and reproducing side.

Meanwhile, the information indicating the type of the auxiliary image is set in this representation as the essential property (EssentialProperty). For example, a scheme for the auxiliary image is set as an element (schemeIdUri="urn:mpeg:DASH:hevc:aux:2014") and the identification information "auxId" indicating the type of the auxiliary image is set as a value (value) thereof. This identification information "auxId" is information similar to the identification information "auxId" of the MP4 file. For example, the information as indicated below is set.

### <EssentialProperty schemeIdUri="urn:mpeg:DASH:hevc:aux:2014"value="auxId">

When such information indicating the type of the auxiliary image is presented as the auxiliary information to the equipment on the receiving and reproducing side, that auxiliary image can be properly utilized at the equipment on the receiving and reproducing side with ease. Moreover, an increase in the information amount can be suppressed by using such identification information to specify the type of the auxiliary image. In addition, a format of the information is formulated as a standard and accordingly, the handling of this information is made easy for the equipment on the receiving and reproducing side. As a result, the type of the auxiliary image can be determined with more ease. Additionally, when the auxiliary information is set in the essential property, the identification of the auxiliary information and the recognition of the specific component thereof are made easy for the equipment on the receiving and reproducing side.

As a matter of course, another type of the information aside from the aforementioned information may be configured to be set in the representation. For example, the SEI (additional information) corresponding to the type of the associate image (the value of the identification information "auxId") may be configured to be set therein.

A segment is set at a lower level of the representation for the information on the auxiliary image having a bandwidth of 3 mbps, where information on the MP4 file (3mbps_aux.mp4) of the auxiliary image (base layer) having a bandwidth of 3 mbps (bandwidth=3mbps) is to be set (registered) to that segment.

In addition, the identification information indicating that the information on the auxiliary image having a bandwidth of 3 mbps is stored there (<id="aux3">), the encoding information indicating that the encoding mode for that auxiliary image is the SHVC mode (<codecs="lha1">), and information indicating the bandwidth (<bandwidth="3mbps">) are set in that representation as the auxiliary information.

Furthermore, the link information (association information) indicating the reference to the representation for the information on the main image having a bandwidth of 3 mbps (id="bs3") and the type of that reference (sbas) (<associationId="bs3" associationType="sbas">) is set in this representation as the auxiliary information.

Meanwhile, as indicated below, the information indicating the type of the auxiliary image is set in this representation as the essential property (EssentialProperty).

### <EssentialProperty schemeIdUri="urn:mpeg:DASH:hevc:aux:2014"value="auxId">

The MPD generation unit 105 generates the MPD as described above, whereby the control of the provision of the auxiliary image used with the main image can be achieved in the file generation device 100.

### <Flow of MP4 File Generation Processing>

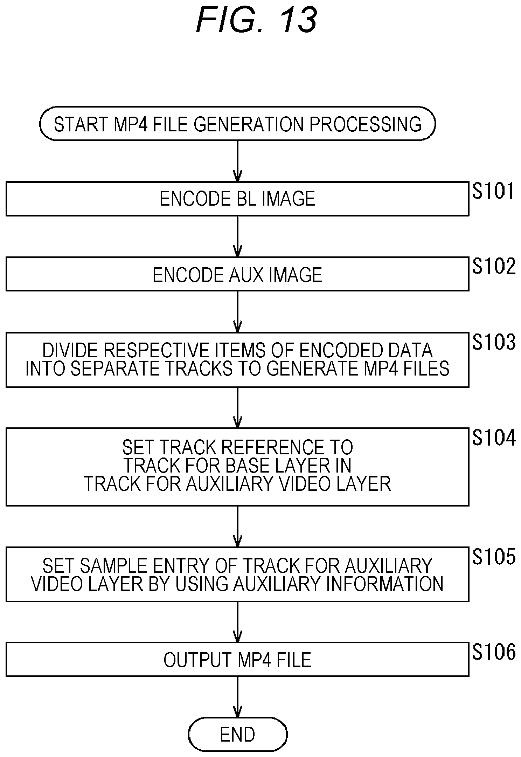

An exemplary flow of MP4 file generation processing carried out as processing for generating the MP4 file as in Fig. 10 by the file generation device 100 in Fig. 9 will be described with reference to a flowchart in Fig. 13.

When the MP4 file generation processing is started, the base layer encoding unit 101 encodes a base layer image (BL image) at step S101.

The auxiliary video layer encoding unit 102 encodes the auxiliary image (AUX image) at step S102.

The MP4 file generation unit 103 divides the respective items of the encoded data into separate tracks at step S103 to generate the MP4 files. In the case of the example in Fig. 10, the MP4 file generation unit 103 generates the MP4 file for each of the tracks.

The MP4 file generation unit 103 sets a track reference to the track for the base layer in the track for the auxiliary video layer at step S104.

The sample entry setting unit 104 sets the sample entry of the track for the auxiliary video layer at step S105 by using the auxiliary information.

The MP4 file generation unit 103 outputs the generated MP4 file at step S106.

As described above, by carrying out the MP4 file generation processing, the file generation device 100 can generate the MP4 file having the configuration as illustrated in Fig. 10. Specifically, the file generation device 100 can be configured to control the provision of the auxiliary image used with the main image through this MP4 file. In other words, the control of the provision of the auxiliary image used with the main image is enabled in the image delivery.

### <Flow of MPD Generation Processing>

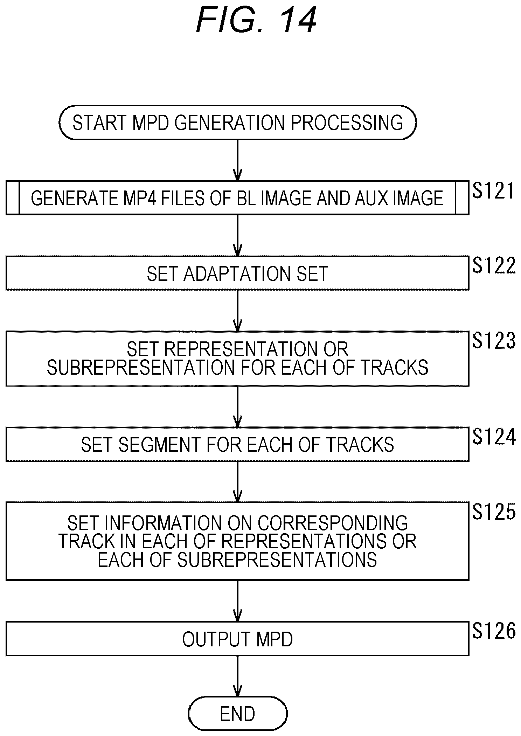

An exemplary flow of MPD generation processing carried out as processing for generating the MPD as in the example in Fig. 12 by the file generation device 100 in Fig. 9 will be described with reference to a flowchart in Fig. 14.

When the MPD generation processing is started, the base layer encoding unit 101, the auxiliary video layer encoding unit 102, the MP4 file generation unit 103, and the sample entry setting unit 104 generate the MP4 files of an image of the base layer (BL image) and an image of the auxiliary video layer (AUX image) at step S121. This processing is carried out in a manner similar to the MP4 file generation processing that has been described with reference to the flowchart in Fig. 13.

Once the MP4 files are generated, the MPD generation unit 105 sets the adaptation set at a lower level of the period at step S122.

The MPD generation unit 105 sets the representation or a subrepresentation at a lower level of the adaptation set for each of the tracks in the MP4 files at step S123.

The MPD generation unit 105 sets the segment for each of the tracks in the MP4 files at a lower level of each of the representations at step S124.

The representation setting unit 106 sets information on the corresponding track in each of the representations or each of the subrepresentations at step S125.

The MPD generation unit 105 outputs the MPD generated as described above at step S126.

As described above, by carrying out the MPD generation processing, the file generation device 100 can generate the MPD having the configuration as illustrated in Fig. 12. Specifically, the file generation device 100 can be configured to control the provision of the auxiliary image used with the main image through this MPD. In other words, the control of the provision of the auxiliary image used with the main image is enabled in the image delivery.

### <File Reproducing Device>

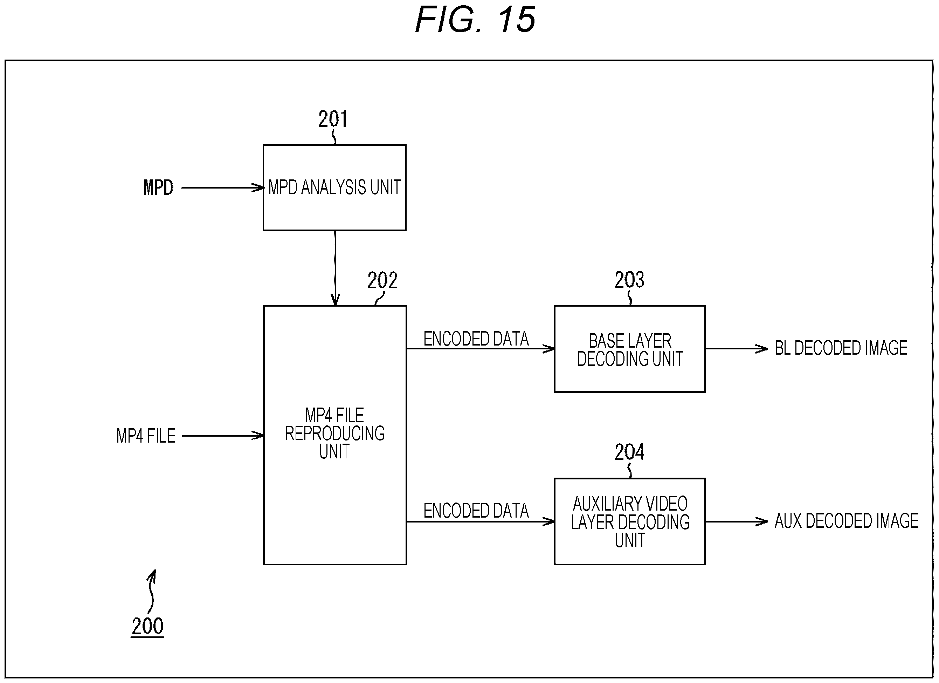

Next, a device that reproduces the MP4 file and the MPD generated as described above will be described. Fig. 15 is a block diagram illustrating an exemplary main configuration of a file reproducing device presented as an embodiment of the information processing device to which the present technology is applied. In Fig. 15, a file reproducing device 200 serves as a device that reproduces the MP4 file and the MPD generated by the file generation device 100 in Fig. 9 as described above and generates a decoded image of the base layer or decoded images of the base layer and the auxiliary video layer to output.

As illustrated in Fig. 15, the file reproducing device 200 includes an MPD analysis unit 201, an MP4 file reproducing unit 202, a base layer decoding unit 203, and an auxiliary video layer decoding unit 204.

The MPD analysis unit 201 acquires the MPD having the configuration as illustrated in Fig. 12 as an example to analyze and then controls the MP4 file reproducing unit 202 on the basis of a result of the analysis.

Under the control of the MPD analysis unit 201, the MP4 file reproducing unit 202 acquires the MP4 file having the configuration as illustrated in Fig. 10 as an example to reproduce and then extracts the encoded data from the track for the base layer. The MP4 file reproducing unit 202 supplies, to the base layer decoding unit 203, the encoded data of the base layer that has been extracted.

The MP4 file reproducing unit 202 also extracts the encoded data from the track for the auxiliary video layer in the MP4 file depending on the necessity. The MP4 file reproducing unit 202 supplies, to the auxiliary video layer decoding unit 204, the encoded data of the auxiliary video layer that has been extracted.

The base layer decoding unit 203 decodes the encoded data supplied from the MP4 file reproducing unit 202 and generates the decoded image of the base layer (BL decoded image). The base layer decoding unit 203 outputs that decoded image of the base layer (BL decoded image).

The auxiliary video layer decoding unit 204 decodes the encoded data supplied from the MP4 file reproducing unit 202 and generates the decoded image of the auxiliary video layer (AUX decoded image). The auxiliary video layer decoding unit 204 outputs that decoded image of the auxiliary video layer (AUX decoded image).

### <Flow of MP4 File Reproduction Processing>

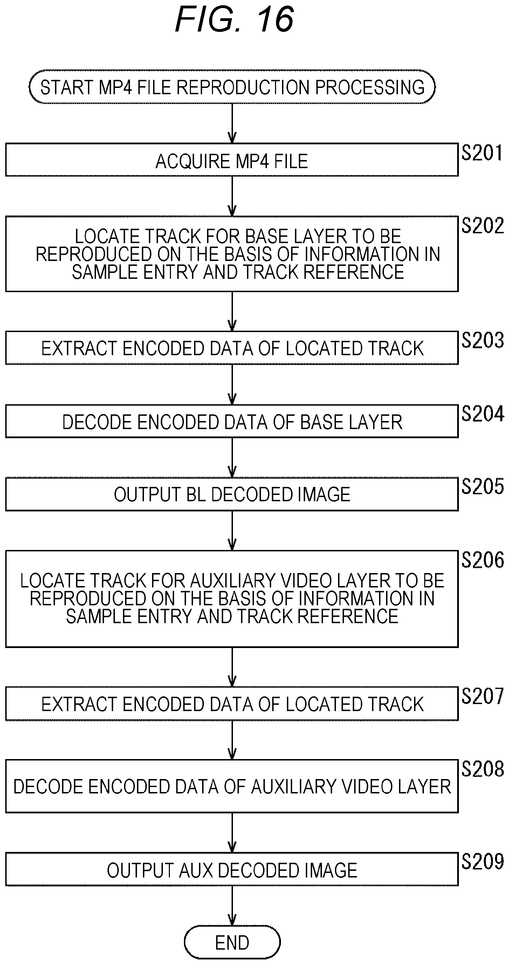

An exemplary flow of MP4 file reproduction processing carried out by this file reproducing device 200 will be described with reference to a flowchart in Fig. 16. Note that a case where the encoded data of both of the base layer and the auxiliary video layer is reproduced will be described here.

When the MP4 file reproduction processing is started, the MP4 file reproducing unit 202 acquires the MP4 file at step S201.

At step S202, on the basis of the information in the sample entry and the track reference, the MP4 file reproducing unit 202 locates the track for the base layer to be reproduced.

The MP4 file reproducing unit 202 extracts the encoded data of the located track at step S203.

The base layer decoding unit 203 decodes the encoded data of the base layer at step S204.

At step S205, the base layer decoding unit 203 outputs the decoded image of the base layer (BL decoded image) that has been generated.

At step S206, on the basis of the information in the sample entry and the track reference, the MP4 file reproducing unit 202 locates the track for the auxiliary video layer to be reproduced.

The MP4 file reproducing unit 202 extracts the encoded data of the located track at step S207.

The auxiliary video layer decoding unit 204 decodes the encoded data of the auxiliary video layer at step S208.

At step S209, the auxiliary video layer decoding unit 204 outputs the decoded image of the auxiliary video layer (AUX decoded image) that has been generated.

Note that, in a case where the base layer is solely decoded, each processing from step S201 to step S205 only is simply carried out.

As described above, by carrying out the MP4 file reproduction processing, the file reproducing device 200 can reproduce the MP4 file having the configuration as illustrated in Fig. 10 and generate the decoded image of each of the layers. At this time, on the basis of the information stored in the MP4 file, the file reproducing device 200 can recognize with ease that the image of the auxiliary video layer is the auxiliary image rather than the usual image. Consequently, incorrect processing on the image of the auxiliary video layer can be suppressed. Specifically, in the file reproducing device 200, the control of the provision of the auxiliary image used with the main image can be achieved by way of the MP4 file. In other words, the control of the provision of the auxiliary image used with the main image is enabled in the image delivery.

### <Flow of MPD Reproduction Processing>

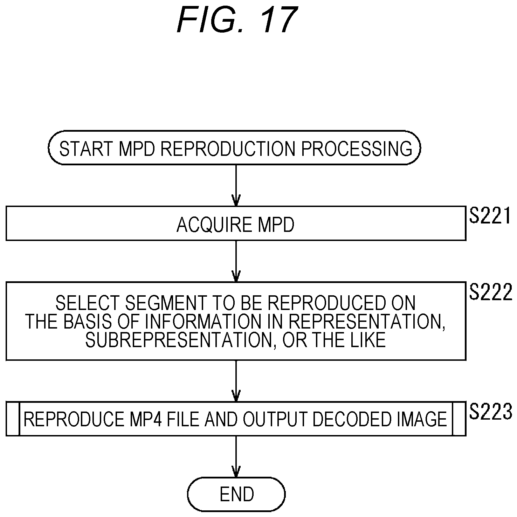

An exemplary flow of MPD reproduction processing carried out by the file reproducing device 200 in Fig. 15 to generate the MPD having the configuration as illustrated in Fig. 12 as an example will be described with reference to a flowchart in Fig. 17.

When the MPD reproduction processing is started, the MPD analysis unit 201 acquires the MPD at step S221.

At step S222, on the basis of the information in the representation, the subrepresentation, or the like in the MPD, the MPD analysis unit 201 selects the segment to be reproduced.

At step S223, in accordance with the control of the MPD analysis unit 201, the MP4 file reproducing unit 202 to the auxiliary video layer reproducing unit 204 reproduce the MP4 file registered in the segment selected at step S222 and generate the decoded image thereof to output. This processing is carried out in a manner similar to the MP4 file reproduction processing that has been described with reference to the flowchart in Fig. 16.

As described above, by carrying out the MPD reproduction processing, the file reproducing device 200 can reproduce the MPD having the configuration as illustrated in Fig. 12 and generate the decoded image of each of the layers. At this time, on the basis of the information stored in the MPD, the file reproducing device 200 can recognize with ease that the image of the auxiliary video layer is the auxiliary image rather than the usual image. Consequently, incorrect processing on the image of the auxiliary video layer can be suppressed. Specifically, in the file reproducing device 200, the control of the provision of the auxiliary image used with the main image can be achieved by way of the MPD. In other words, the control of the provision of the auxiliary image used with the main image is enabled in the image delivery.

### <2. Second Embodiment>

### <Exemplary Configuration of MP4 File>

Note that, although the exemplary configuration of the MP4 file has been described with reference to Fig. 10, the configuration is not limited to this example. For example, the plurality of main images (BL images) may be associated with one auxiliary image (AUX image). Specifically, that plurality of main images may be configured such that any thereof can be used (for example, displayed) with one common auxiliary image.

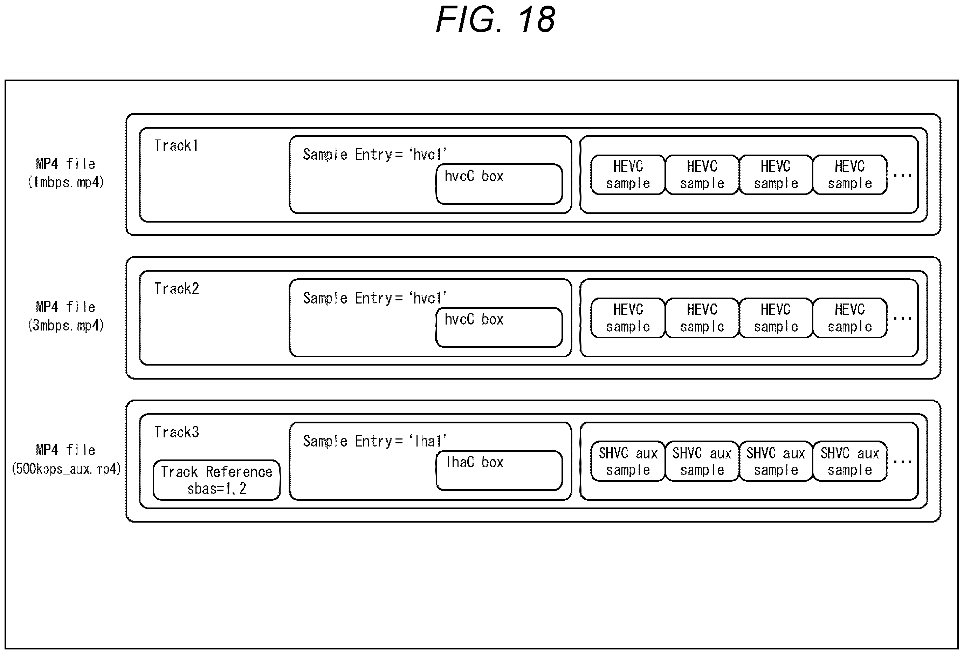

Fig. 18 illustrates an exemplary configuration of the MP4 file of such a case. In this case, a track 3 (Track3) stores the information on the auxiliary image associated with both of the main image having a bandwidth of 1 mbps, which is stored in a track 1 (Track1), and the main image having a bandwidth of 3 mbps, which is stored in a track 2 (Track2). Accordingly, in this case, the reference relationship with the track 1 and the track 2 is indicated in the track reference of the track 3 (sbas=1.2). The other configuration is similar to the case of Fig. 10.

In the MP4 file, as described above, one auxiliary image can be linked with the plurality of main images with ease by using the track reference.

The MP4 file generation processing and the MP4 file reproduction processing in this case are similar to the case of the first embodiment and thus, the description thereof will be omitted.

Specifically, also in this case, the control of the provision of the auxiliary image used with the main image is enabled in the image delivery.

### <Exemplary Configuration of MPD>

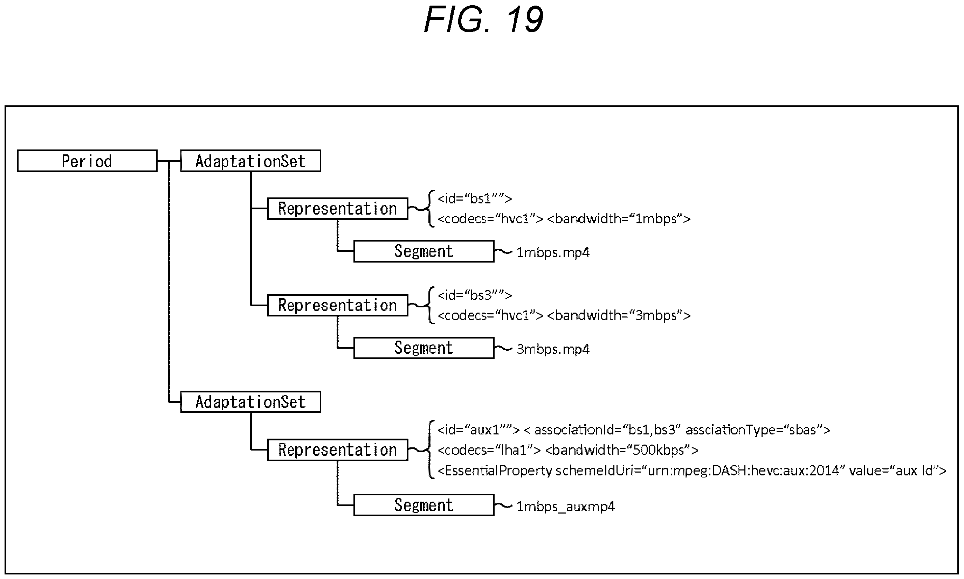

Additionally, Fig. 19 illustrates an exemplary configuration of the MPD in this case. As illustrated in Fig. 19, one representation to which the information on the auxiliary image having a bandwidth of 500 kbps is stored is set at a lower level of the adaptation set of the auxiliary image. This auxiliary image is linked with both of the main image having a bandwidth of 1 mbps and the main image having a bandwidth of 3 mbps.

Accordingly, the link information (association information) indicating the references to both of the representation for the information on the main image having a bandwidth of 1 mbps (id="bs1") and the representation for the information on the main image having a bandwidth of 3 mbps (id="bs3") and the type of these references (sbas) (<associationId="bs1,bs3" associationType="sbas">) is set in the representation for this auxiliary image as the auxiliary information. The other configuration is similar to the case of Fig. 12.

In the MPD, as described above, one auxiliary image can be linked with the plurality of main images with ease by using the association information.

The MPD generation processing and the MPD reproduction processing in this case are similar to the case of the first embodiment and thus, the description thereof will be omitted.

Specifically, also in this case, the control of the provision of the auxiliary image used with the main image is enabled in the image delivery.

### <3. Third Embodiment>

### <Exemplary Configuration of MP4 File>

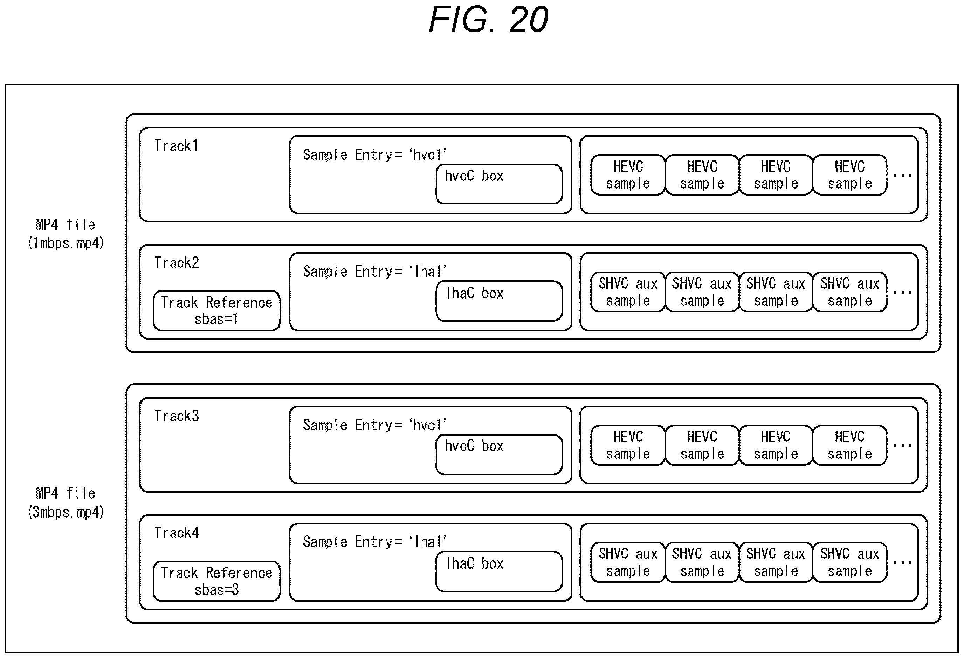

Alternatively, in the MP4 file, for example, the track storing the information on the main image (BL image) and the track storing the information on the auxiliary image (AUX image) may be configured to be contained in one file. Fig. 20 illustrates an exemplary main configuration of the MP4 file of such a case.

In the case of the example in Fig. 20, a track 1 storing the information on the main image having a bandwidth of 1 mbps and a track 2 storing the corresponding auxiliary information are contained in one MP4 file (1mbps.mp4). Likewise, a track 3 storing the information on the main image having a bandwidth of 3 mbps and a track 4 storing the corresponding auxiliary information are contained in one MP4 file (3mbps.mp4).

When the configuration as described above is employed, both of the main image and the auxiliary image linked with each other can be acquired by only acquiring one MP4 file. In other words, the handling of the MP4 file is made easy at the equipment on the receiving and reproducing side. For example, as in the example in Fig. 10, when the tracks are individually converted to separate files, it is necessary to acquire the plurality of MP4 files corresponding to the number of tracks in order to use the plurality of tracks. On the other hand, as in the example in Fig. 20, when the main image and the auxiliary image linked with each other are kept in one MP4 file, it is possible to reduce the number of MP4 files to be acquired. In this case, however, a track not to be used can be contained in the MP4 file and thus, there is a possibility of being forced to acquire unnecessary information. In the case of the example in Fig. 10, the acquisition of unnecessary information can be further reduced.

Also in this case, the MP4 file generation processing and the MP4 file reproduction processing are similar to the case of the first embodiment and thus, the description thereof will be omitted.

Specifically, also in this case, the control of the provision of the auxiliary image used with the main image is enabled in the image delivery.

### <Exemplary Configuration of MPD>

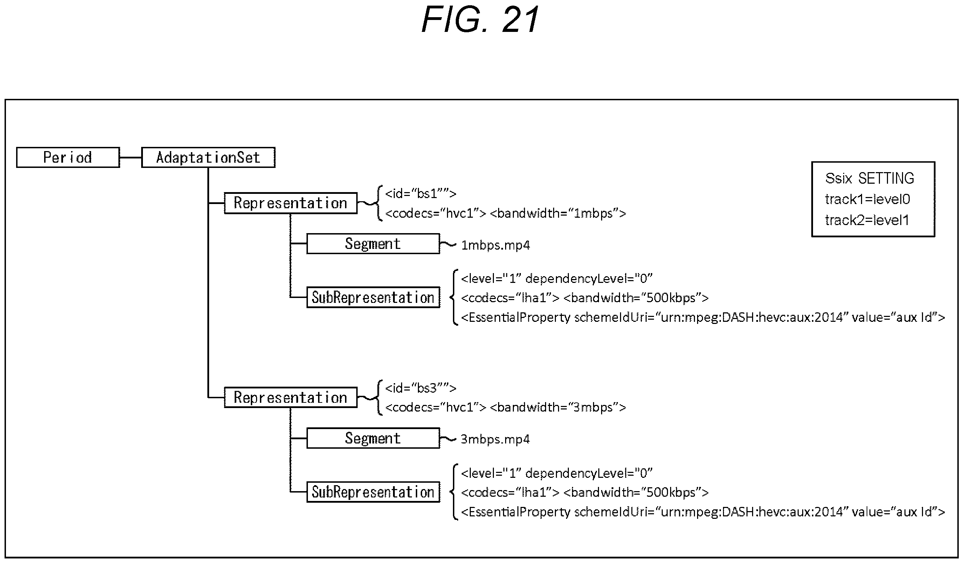

Additionally, Fig. 21 illustrates an exemplary configuration of the MPD in this case. As illustrated in Fig. 21, the information on the auxiliary image and the main image corresponding to each other is stored in one (common) adaptation set in this case.

In addition, in this case, the subrepresentation is set at a lower level of the representation, where the information on the auxiliary image is set in this subrepresentation. In the case of the example in Fig. 21, the encoding information indicating that the encoding mode for the auxiliary image is the SHVC mode (<codecs="lha1">) and information indicating the bandwidth (<bandwidth="500kbps">) are set in the subrepresentation.

Meanwhile, the essential property (EssentialProperty) as indicated below is set, where a scheme for the auxiliary image is set as an element (schemeIdUri="urn:mpeg:DASH:hevc:aux:2014") and the identification information "auxId" indicating the type of the auxiliary image is set as a value (value) thereof.

### <EssentialProperty schemeIdUri="urn:mpeg:DASH:hevc:aux:2014"value="auxId">

Additionally, level information indicating the reference relationship between the main image and the auxiliary image is set as indicated below.

### <level="1" dependencyLevel="0">

In this level information, the main image (track 1) is set at a level 0 (level0), whereas the auxiliary image (track 2) is set at a level 1 (level1). Specifically, the description above represents that the auxiliary image is positioned at the level 1 and dependent on the main image at the level 0.

The MPD generation processing and the MPD reproduction processing in this case are similar to the case of the first embodiment and thus, the description thereof will be omitted.

Specifically, also in this case, the control of the provision of the auxiliary image used with the main image is enabled in the image delivery.

### <4. Fourth Embodiment>

### <Delivery System>

Each of the devices described in the respective embodiments thus far can be used in, for example, a delivery system configured to deliver a still image and a moving image. Such a case will be described hereinafter.

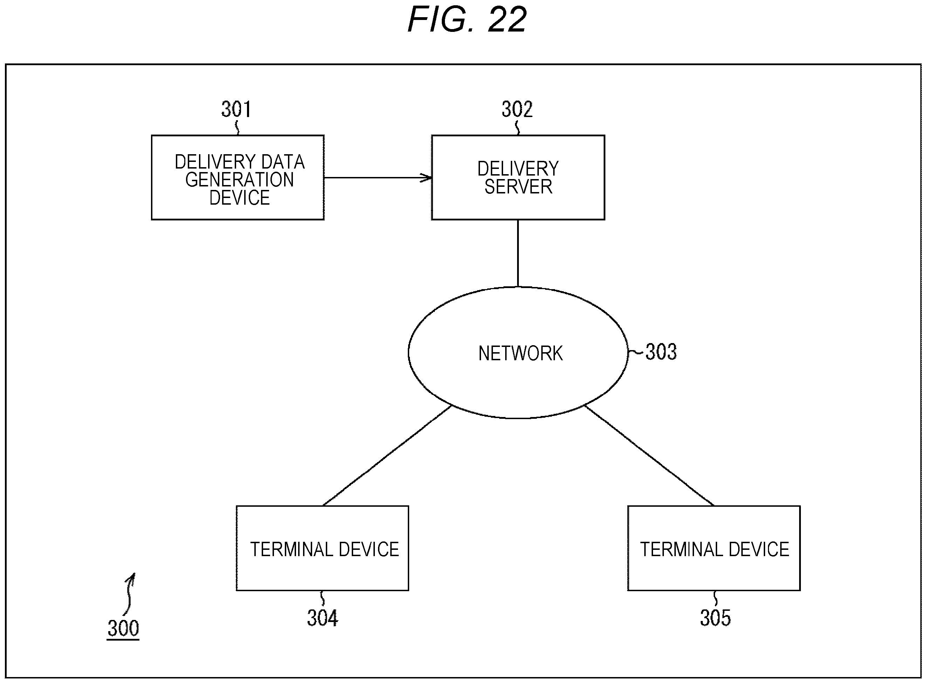

Fig. 22 is a diagram illustrating an exemplary main configuration of a delivery system to which the present technology is applied. A delivery system 300 illustrated in Fig. 22 is a system that delivers the still image and the moving image. As illustrated in Fig. 22, the delivery system 300 includes a delivery data generation device 301, a delivery server 302, a network 303, a terminal device 304, and a terminal device 305.

The delivery data generation device 301 generates delivery data in a format for delivery from data of the still image and the moving image to be delivered. The delivery data generation device 301 supplies the generated delivery data to the delivery server 302. The delivery server 302 manages the delivery data generated by the delivery data generation device 301 by storing to a storage unit or the like and provides a delivery service of that delivery data to the terminal device 304 and the terminal device 305 through the network 303.

The network 303 is a communication network serving as a communication medium. The network 303 can be configured as any type of the communication network and may be a wired communication network, a wireless communication network, or alternatively, both of them. For example, a wired local area network (LAN), a wireless LAN, a public telephone line network, a wide area communication network for a wireless mobile body such as so-called 3G line and 4G line, or the Internet or the like may be employed. Alternatively, a combination thereof may be employed. In addition, the network 303 may be constituted by a single number of the communication network or a plural number of the communication networks. Meanwhile, for example, a portion or the whole of the network 303 may be configured to include a communication cable of a predetermined standard such as a universal serial bus (USB) cable or a high-definition multimedia interface (HDMI) (registered trademark) cable.

The delivery server 302, the terminal device 304, and the terminal device 305 are connected to this network 303 and set up such that the communication thereamong is possible. A method for connecting these members to the network 303 is arbitrary. For example, these devices may be configured to be connected to the network 303 by way of a wired communication, or alternatively, may be configured to be connected thereto by way of a wireless communication. Additionally, for example, these devices may be configured to be connected to the network 303 through an arbitrary communication device (communication facility) such as an access point, a relay device, or a base station.

Each of the terminal device 304 and the terminal device 305 is an arbitrary electronic appliance having a communication function such as a portable phone, a smartphone, a tablet type computer, or a note type computer. The terminal device 304 or the terminal device 305 requests the delivery server 302 for delivery of a delivery file on the basis of an instruction from, for example, a user.

The delivery server 302 sends the requested delivery data to a requester. The terminal device 304 or the terminal device 305 that has requested the delivery receives that delivery data to reproduce.

In the delivery system 300 as described above, the present technology that has been described earlier in the respective embodiments is applied as the delivery data generation device 301. Specifically, the aforementioned file generation device 100 is employed to be used as the delivery data generation device 301.

In addition, the present technology that has been described earlier in the respective embodiments is applied as the terminal device 304 and the terminal device 305. Specifically, the aforementioned file reproducing device 200 is employed to be used as the terminal device 304 and the terminal device 305.

When configured in this manner, effects similar to those of the aforementioned respective embodiments can be obtained in the delivery data generation device 301, the terminal device 304, and the terminal device 305. In other words, the provision of the auxiliary image used with the main image can be controlled in the delivery system 300.

### <5. Fifth Embodiment>

### <Computer>

A series of the above-described processing can be carried out by using hardware as well and also can be carried out by using software. When the series of the processing is carried out by software, a program constituting the software is installed in a computer. Here, the computer includes a computer built into dedicated hardware and a computer capable of executing various types of functions when installed with various types of programs, for example, a general-purpose personal computer.

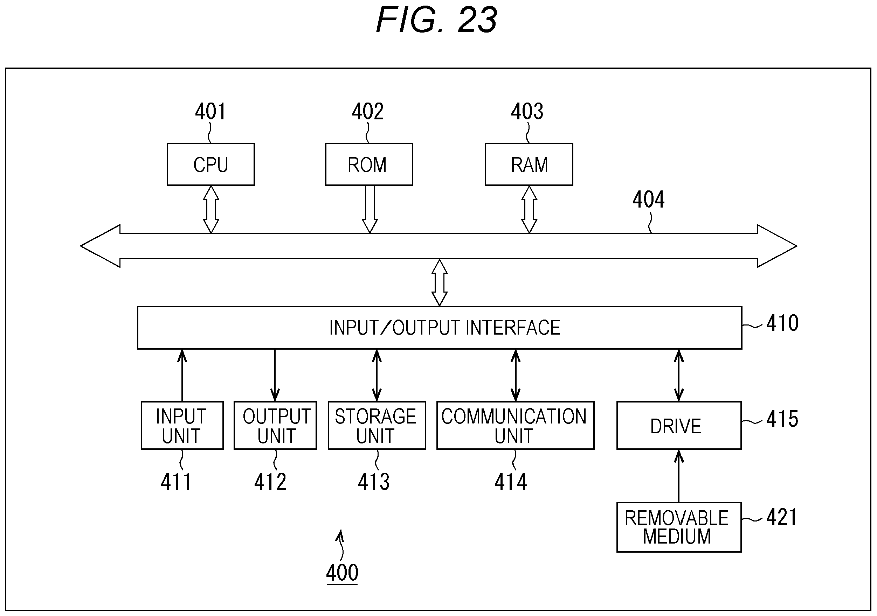

Fig. 23 is a block diagram illustrating an exemplary hardware configuration of a computer that carries out the aforementioned series of the processing using a program.

In the computer 400 illustrated in Fig. 23, a central processing unit (CPU) 401, a read only memory (ROM) 402, and a random access memory (RAM) 403 are interconnected through a bus 404.

Additionally, an input/output interface 410 is connected to the bus 404. An input unit 411, an output unit 412, a storage unit 413, a communication unit 414, and a drive 415 are connected to the input/output interface 410.

For example, the input unit 411 includes a keyboard, a mouse, a microphone, a touch panel, and an input terminal. For example, the output unit 412 includes a display, a speaker, and an output terminal. For example, the storage unit 413 includes a hard disk, a RAM disk, and a non-volatile memory. For example, the communication unit 414 includes a network interface. The drive 415 drives a removable medium 421 such as a magnetic disk, an optical disc, a magneto-optical disk, or a semiconductor memory.

In the computer configured as described above, for example, the aforementioned series of the processing is carried out in such a manner that the CPU 401 loads a program stored in the storage unit 413 to the RAM 403 through the input/output interface 410 and the bus 404 to execute. Data required by the CPU 401 when carrying out the various types of the processing, and so on are also stored in the RAM 403 as necessary.

For example, the program executed by the computer (CPU 401) can be applied by being recorded in the removable medium 421 serving as a package medium or the like. In this case, the program can be installed to the storage unit 413 through the input/output interface 410 by mounting the removable medium 421 in the drive 415.

In addition, this program can be also provided through a wired or wireless transmission medium such as a local area network, the Internet, or digital satellite broadcasting. In this case, the program can be received by the communication unit 414 to be installed to the storage unit 413.

As an alternative manner, this program can be installed to the ROM 402 or the storage unit 413 in advance.

Note that the program executed by the computer may be a program in which the processing is carried out along the time series in accordance with the order described in the present description, or alternatively, may be a program in which the processing is carried out in parallel or at a necessary timing, for example, when called.

In addition, in the present description, steps describing the program to be recorded in a recording medium off course include processing carried out along the time series in accordance with the order in which the steps are described and additionally include processing not necessarily processed along the time series but carried out in a parallel manner or individually.

Furthermore, the processing by the aforementioned steps can be carried out by the aforementioned respective devices or an arbitrary device other than the aforementioned respective devices. In such a case, the device which is to carry out that processing is simply configured to have a function required to carry out that aforementioned processing (e.g., a function block). In addition, information required for the processing can be configured to be transmitted to that device as necessary.

Meanwhile, in the present description, the system refers to a collection of a plurality of constituent members (e.g., devices and modules (components)) and whether all the constituent members are arranged within the same cabinet is not regarded as important. Therefore, a plurality of devices accommodated in separated cabinets so as to be connected to one another through a network and one device of which a plurality of modules is accommodated within one cabinet are both deemed as systems.

Additionally, in the aforementioned cases, a configuration described as one device (or a processing unit) may be divided so as to be configured as a plurality of devices (or processing units). Or conversely, in the aforementioned cases, a configuration described as a plurality of devices (or processing units) may be integrated so as to be configured as one device (or a processing unit). In addition, as a matter of course, a configuration other than those described above may be employed to be added to the configurations of the respective devices (or the respective processing units). Furthermore, a portion of a certain device (or a certain processing unit) may be configured to be included in the configuration of another device (or another processing unit) as long as the configuration or the operation of the system as a whole is maintained substantially unchanged.

The favorable embodiments of the present disclosure have been described in detail thus far with reference to the accompanying drawings. However, the technological scope of the present disclosure is not limited to these examples. It is clear that a person with average knowledge on the technological field of the present disclosure can arrive at various variations or modifications within a range of the technological spirit disclosed in claims and as a matter of course, these are comprehended as part of the technological scope of the present disclosure.

For example, the present technology can employ a cloud computing configuration in which one function is divided and allocated to a plurality of devices so as to be processed in coordination thereamong through a network.

In addition, the respective steps described in the aforementioned flowcharts can be carried out by a plurality of devices each taking a share thereof as well as carried out by a single device.

Furthermore, when a plurality of processing is included in one step, that plurality of processing included in one step can be carried out by a plurality of devices each taking a share thereof as well as carried out by a single device.

Additionally, the present technology is not limited thereto and can be also carried out as any configuration equipped in a device constituting the device or the system described above, for example, a processor serving as system large scale integration (LSI) or the like, a module using a plurality of processors or the like, a unit using a plurality of modules or the like, or a set in which another function is further added to a unit, or the like (that is, a partial configuration of a device).

Note that the present technology can be also configured as described below.
(1) An information processing device including a file generation unit configured to generate a file containing a track storing encoded data in which image data of an auxiliary image used with a main image is encoded and auxiliary information serving as information regarding the auxiliary image.
(2) The information processing device according to (1), in which
   the auxiliary information contains identification information indicating that the track is a track storing the encoded data in which the image data of the auxiliary image is encoded.
(3) The information processing device according to (1) or (2), in which
   the auxiliary information contains information indicating a type of the auxiliary image.
(4) The information processing device according to (3), in which
   the information indicating the type of the auxiliary image contains information indicating whether the auxiliary image is information on an α channel used as chroma key, depth information, or information on overlay displayed by being superimposed on the main image.
(5) The information processing device according to (3) or (4), in which
   the auxiliary information further contains additional information on the encoded data, which corresponds to the information indicating the type of the auxiliary image.
(6) The information processing device according to any one of (1) to (5), in which
   the auxiliary information is stored in a sample entry of the track.
(7) The information processing device according to any one of (1) to (6), in which
   the file generation unit generates a file containing the track storing the encoded data in which the image data of the main image is encoded as a file different from the file containing the track storing the encoded data in which the image data of the auxiliary image is encoded.
(8) The information processing device according to (7), in which
   the file generation unit generates the plurality of files each containing the track storing the encoded data in which the image data of the main image is encoded with respect to one file containing the track storing the encoded data in which the image data of the auxiliary image is encoded.
(9) The information processing device according to any one of (1) to (8), in which
   the file generation unit generates a file containing both of the track storing the encoded data in which the image data of the auxiliary image is encoded and the track storing the encoded data in which the image data of the main image is encoded.
(10) An information processing method configured to generate a file containing a track storing encoded data in which image data of an auxiliary image used with a main image is encoded and auxiliary information serving as information regarding the auxiliary image.
(11) An information processing device including a meta data generation unit configured to generate meta data that controls the reproduction of a file containing encoded data in which image data of an auxiliary image used with a main image is encoded while containing auxiliary information serving as information regarding the auxiliary image.
(12) The information processing device according to (11), in which
   the auxiliary information is set in a representation to which a segment belongs, in which segment the file containing the encoded data in which the image data of the auxiliary image is encoded is set.
(13) The information processing device according to (11) or (12), in which
   the auxiliary information contains information indicating a type of the auxiliary image.
(14) The information processing device according to (13), in which
   the information indicating the type of the auxiliary image contains information indicating whether the auxiliary image is information on an α channel used as chroma key, depth information, or information on overlay displayed by being superimposed on the main image.
(15) The information processing device according to (13) or (14), in which
   the auxiliary information further contains additional information on the encoded data, which corresponds to the information indicating the type of the auxiliary image.
(16) The information processing device according to any one of (11) to (15), in which
   at least a portion of the auxiliary information is set in an essential property of the representation to which the segment belongs, in which segment the file containing the encoded data in which the image data of the auxiliary image is encoded is set.
(17) The information processing device according to any one of (11) to (16), in which
   the meta data has both of an adaptation set containing information on the file containing the encoded data in which the image data of the auxiliary image is encoded and an adaptation set containing information on a file containing the encoded data in which the image data of the main image is encoded.
(18) The information processing device according to (17), in which
   the meta data has the plurality of representations belonging to the adaptation set containing the information on the file containing the encoded data in which the image data of the main image is encoded.
(19) The information processing device according to any one of (11) to (18), in which
   the meta data has an adaptation set containing information on a file containing both of the encoded data in which the image data of the auxiliary image is encoded and the encoded data in which the image data of the main image is encoded.
(20) An information processing method configured to generate meta data that controls the reproduction of a file containing encoded data in which image data of an auxiliary image used with a main image is encoded while containing auxiliary information serving as information regarding the auxiliary image.

### REFERENCE SIGNS LIST

- 100: File generation device
- 101: Base layer encoding unit
- 102: Auxiliary video layer encoding unit
- 103: MP4 file generation unit
- 104: Sample entry setting unit
- 105: MPD generation unit
- 106: Representation setting unit
- 200: File reproducing device
- 201: MPD analysis unit
- 202: MP4 file reproducing unit
- 203: Base layer decoding unit
- 204: Auxiliary video layer decoding unit
- 300: Delivery system
- 301: Delivery data generation device
- 302: Delivery server
- 303: Network
- 304 and 305: Terminal device
- 400: Computer

## Claims

1. An information processing device comprising a file generation unit configured to generate a file containing a track storing encoded data in which image data of an auxiliary image used with a main image is encoded and auxiliary information serving as information regarding the auxiliary image.

2. The information processing device according to claim 1, wherein
the auxiliary information contains identification information indicating that the track is a track storing the encoded data in which the image data of the auxiliary image is encoded.

3. The information processing device according to claim 1, wherein
the auxiliary information contains information indicating a type of the auxiliary image.

4. The information processing device according to claim 3, wherein
the information indicating the type of the auxiliary image contains information indicating whether the auxiliary image is information on an α channel used as chroma key, depth information, or information on overlay displayed by being superimposed on the main image.

5. The information processing device according to claim 3, wherein
the auxiliary information further contains additional information on the encoded data, which corresponds to the information indicating the type of the auxiliary image.

6. The information processing device according to claim 1, wherein
the auxiliary information is stored in a sample entry of the track.

7. The information processing device according to claim 1, wherein
the file generation unit generates a file containing the track storing the encoded data in which the image data of the main image is encoded as a file different from the file containing the track storing the encoded data in which the image data of the auxiliary image is encoded.

8. The information processing device according to claim 7, wherein
the file generation unit generates the plurality of files each containing the track storing the encoded data in which the image data of the main image is encoded with respect to one file containing the track storing the encoded data in which the image data of the auxiliary image is encoded.

9. The information processing device according to claim 1, wherein
the file generation unit generates a file containing both of the track storing the encoded data in which the image data of the auxiliary image is encoded and the track storing the encoded data in which the image data of the main image is encoded.

10. An information processing method configured to generate a file containing a track storing encoded data in which image data of an auxiliary image used with a main image is encoded and auxiliary information serving as information regarding the auxiliary image.

11. An information processing device comprising a meta data generation unit configured to generate meta data that controls reproduction of a file containing encoded data in which image data of an auxiliary image used with a main image is encoded while containing auxiliary information serving as information regarding the auxiliary image.

12. The information processing device according to claim 11, wherein
the auxiliary information is set in a representation to which a segment belongs, in which segment the file containing the encoded data in which the image data of the auxiliary image is encoded is set.

13. The information processing device according to claim 11, wherein
the auxiliary information contains information indicating a type of the auxiliary image.

14. The information processing device according to claim 13, wherein
the information indicating the type of the auxiliary image contains information indicating whether the auxiliary image is information on an α channel used as chroma key, depth information, or information on overlay displayed by being superimposed on the main image.

15. The information processing device according to claim 13, wherein
the auxiliary information further contains additional information on the encoded data, which corresponds to the information indicating the type of the auxiliary image.

16. The information processing device according to claim 11, wherein
at least a portion of the auxiliary information is set in an essential property of the representation to which the segment belongs, in which segment the file containing the encoded data in which the image data of the auxiliary image is encoded is set.

17. The information processing device according to claim 11, wherein
the meta data has both of an adaptation set containing information on the file containing the encoded data in which the image data of the auxiliary image is encoded and an adaptation set containing information on a file containing the encoded data in which the image data of the main image is encoded.

18. The information processing device according to claim 17, wherein
the meta data has the plurality of representations belonging to the adaptation set containing the information on the file containing the encoded data in which the image data of the main image is encoded.

19. The information processing device according to claim 11, wherein
the meta data has an adaptation set containing information on a file containing both of the encoded data in which the image data of the auxiliary image is encoded and the encoded data in which the image data of the main image is encoded.

20. An information processing method configured to generate meta data that controls reproduction of a file containing encoded data in which image data of an auxiliary image used with a main image is encoded while containing auxiliary information serving as information regarding the auxiliary image.
